# EUROPEAN PATENT APPLICATION

(11) **EP 4 529 273 A1**
(43) Date of publication of application: **26.03.2025**
(21) Application number: 23826269.5
(22) Date of filing: 15.06.2023
(51) Int. Cl.: H04W 36/14

(54) **COMMUNICATION METHOD, APPARATUS AND SYSTEM**

(30) Priority: 20.06.2022 CN 202210699286; 09.02.2023 CN 202310143598
(71) Applicant: Huawei Technologies Co., Ltd., Shenzhen, Guangdong 518129 (CN)
(72) Inventor: ZHU, Fangyuan, Shenzhen, Guangdong 518129 (CN); SUN, Haiyang, Shenzhen, Guangdong 518129 (CN)
(74) Representative: Pfenning, Meinig & Partner mbB
(86) International application number: PCT/CN2023/100448
(87) International publication number: WO 2023/246620

(57) **Abstract**

This application provides a communication method, apparatus, and system. The method includes: A visited policy control network element updates a first service parameter to a second service parameter based on a mapping relationship between first network slice identification information of a visited network and second network slice identification information of a home network, where the first service parameter includes the first network slice identification information of the visited network, and the second service parameter includes the second network slice identification information of the home network; and the visited policy control network element sends the second service parameter to a home policy control network element, where the second service parameter is used to determine a user route selection policy for a terminal device. The technical solutions of this application help generate the user route selection policy for the terminal device, so that the terminal device successfully accesses a service of the visited network.

## Description

This application claims priorities to Chinese Patent Application No. 202210699286.1, filed with the China National Intellectual Property Administration on June 20, 2022 and entitled "NETWORK SLICE INFORMATION DETERMINING METHOD, APPARATUS, AND SYSTEM", and to Chinese Patent Application No. 202310143598.9, filed with the China National Intellectual Property Administration on February 9, 2023 and entitled "COMMUNICATION METHOD, APPARATUS, AND SYSTEM", which are incorporated herein by reference in their entireties.

### TECHNICAL FIELD

This application relates to the communication field, and more specifically, to a communication method, apparatus, and system.

### BACKGROUND

To meet diversified requirements and isolation between slices, a 5th generation (5th generation, 5G) network slicing technology provides mutually isolated network environments for different application scenarios by virtualizing independent logical networks on a same network infrastructure, so that network functions and characteristics can be customized for the different application scenarios based on respective requirements. When a network slice is deployed in a core network, if user equipment (user equipment, UE) (for example, a terminal device) needs to access a slice, the UE may provide requested network slice selection assistance information (requested network slice selection assistance information, Requested NSSAI) for the core network, so that the core network selects a public data network (public data network, PDN) network route access policy (UE route selection policy, URSP) for the UE. According to the URSP, a network side may control the UE to create a session associated with a specific application/a specific type of application, so that the UE can access a service of the application by using the session. Usually, the URSP is generated by a home public land mobile network (home public land mobile network, HPLMN) network. The network needs to know in advance attribute information of the session associated with the application, and further generate the URSP based on the information.

When the UE is in a roaming scenario, because some applications may be temporarily deployed in a visited public land mobile network (visited public land mobile network, VPLMN), but the HPLMN is unaware of information about these applications, a policy control network element (policy control function, PCF) in the VPLMN (V-PCF for short) needs to provide some UE policy assistance information (where for example, the assistance information may include data network names (data network names, DNNs), session and service continuity (session and service continuity, SSC) modes, network slice information, and the like that are associated with some applications deployed in the VPLMN) corresponding to a visited location for a PCF in the HPLMN (H-PCF for short). The network slice information included in the UE policy assistance information corresponding to the visited location is single-network slice selection assistance information (single-network slice selection assistance information, S-NSSAI) in the VPLMN. In a process of generating the URSP, the H-PCF may comprehensively consider the UE policy assistance information that corresponds to the visited location and that is sent by the V-PCF. In this way, an optimal URSP is determined for the roaming UE, and the roaming UE can access, by using the enhanced URSP, some applications deployed in the VPLMN. However, after the assistance information from the V-PCF is put into the enhanced URSP, some S-NSSAI in the URSP is HPLMN values (values), and some S-NSSAI in the URSP is VPLMN values (values) (where the VPLMN values are from the V-PCF). This affects use of the URSP by the UE. Therefore, VPLMN S-NSSAI included in the assistance information needs to be mapped to HPLMN S-NSSAI.

### SUMMARY

This application provides a communication method, apparatus, and system, to obtain a mapping relationship between visited network slice identification information of a terminal device and home network slice identification information of the terminal device. This helps generate a user route selection policy for the terminal device, so that the terminal device successfully accesses a service of a visited network.

According to a first aspect, a communication method is determined, including: A visited policy control network element updates a first service parameter to a second service parameter based on a mapping relationship between first network slice identification information of a visited network and second network slice identification information of a home network, where the first service parameter includes the first network slice identification information of the visited network, and the second service parameter includes the second network slice identification information of the home network; and the visited policy control network element sends the second service parameter to a home policy control network element, where the second service parameter is used to determine a user route selection policy for a terminal device.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses a service of the visited network.

With reference to the first aspect, in some implementations of the first aspect, the method further includes: The visited policy control network element receives the mapping relationship from a visited mobility management network element.

With reference to the first aspect, in some implementations of the first aspect, before the mapping relationship is received, the method further includes: The visited policy control network element sends a message for obtaining the mapping relationship to the visited mobility management network element.

With reference to the first aspect, in some implementations of the first aspect, the mapping relationship includes a mapping relationship that is between configured network slice identification information and home network slice identification information and that is determined by a visited location for the terminal device, the configured network slice identification information includes the first network slice identification information, and the home network slice identification information includes the second network slice identification information.

With reference to the first aspect, in some other implementations of the first aspect, the method further includes: The visited policy control network element obtains the mapping relationship from a local configuration.

With reference to the first aspect, in some other implementations of the first aspect, the method further includes: The visited policy control network element receives, from a visited mobility management network element, identification information of a network slice to which the terminal device subscribes. That the visited policy control network element updates the first service parameter to the second service parameter based on the mapping relationship includes: The visited policy control network element updates the first service parameter to the second service parameter based on the mapping relationship and the identification information of the network slice to which the terminal device subscribes.

With reference to the first aspect, in some other implementations of the first aspect, before the identification information of the network slice to which the terminal device subscribes is received, the method further includes: The visited policy control network element sends, to the visited mobility management network element, a message for obtaining the identification information of the network slice to which the terminal device subscribes.

With reference to the first aspect, in some other implementations of the first aspect, the method further includes: The visited policy control network element obtains the first service parameter from a visited unified data repository network element.

With reference to the first aspect, in some implementations of the first aspect, the method further includes: The visited policy control network element receives the user route selection policy from the home policy control network element; and the visited policy control network element sends the user route selection policy to the visited mobility management network element, where the user route selection policy is to be used by the terminal device to access a service of the visited network.

According to a second aspect, a communication system is provided, including a visited policy control network element and a home policy control network element. The visited policy control network element is configured to: update a first service parameter to a second service parameter based on a mapping relationship between first network slice identification information of a visited network and second network slice identification information of a home network, and send the second service parameter to the home policy control network element, where the first service parameter includes the first network slice identification information of the visited network, and the second service parameter includes the second network slice identification information of the home network. The home policy control network element is configured to determine a user route selection policy for a terminal device based on the second service parameter, where the user route selection policy is to be used by the terminal device to access a visited service.

According to the communication system in this application, a service parameter can be updated based on a mapping relationship between visited network slice identification information of the terminal device and home network slice identification information of the terminal device. This helps generate the user route selection policy for the terminal device, so that the terminal device successfully accesses a service of the visited network.

With reference to the second aspect, in some implementations of the second aspect, the system further includes a visited mobility management network element, and the visited mobility management network element is configured to send the mapping relationship to the visited policy control network element.

With reference to the second aspect, in some implementations of the second aspect, the visited mobility management network element is further configured to receive, from the visited policy control network element, a message for obtaining the mapping relationship.

With reference to the second aspect, in some implementations of the second aspect, the mapping relationship includes a mapping relationship that is between configured network slice identification information and home network slice identification information and that is determined by a visited location for the terminal device, the configured network slice identification information includes the first network slice identification information, and the home network slice identification information includes the second network slice identification information.

With reference to the second aspect, in some other implementations of the second aspect, the visited policy control network element is further configured to obtain the mapping relationship from a local configuration.

With reference to the second aspect, in some other implementations of the second aspect, the visited mobility management network element is further configured to send, to the visited policy control network element, identification information of a network slice to which the terminal device subscribes; and the visited policy control network element is specifically configured to update the first service parameter of the terminal device to the second service parameter based on the mapping relationship and the identification information of the network slice to which the terminal device subscribes.

With reference to the second aspect, in some other implementations of the second aspect, the visited mobility management network element is further configured to receive, from the visited policy control network element, a message for obtaining the identification information of the network slice to which the terminal device subscribes.

With reference to the second aspect, in some implementations of the second aspect, the system further includes a visited unified data repository network element, and the visited unified data repository network element is configured to send the first service parameter to the visited policy control network element.

With reference to the second aspect, in some other implementations of the second aspect, the home policy control network element is further configured to send the user route selection policy to the visited policy control network element; and the visited policy control network element is further configured to send the URSP to the visited mobility management network element.

According to a third aspect, a communication method is provided, including: A visited policy control network element sends a second service parameter to a home policy control network element, where the second service parameter is obtained by the visited policy control network element by updating a first service parameter based on a mapping relationship between first network slice identification information of a visited network and second network slice identification information of a home network; and the home policy control network element determines a user route selection policy for a terminal device based on the second service parameter, where the user route selection policy is to be used by the terminal device to access a visited service.

With reference to the third aspect, in some implementations of the third aspect, the method further includes: The visited policy control network element sends a message for obtaining the mapping relationship to a visited mobility management network element; and the visited mobility management network element sends the mapping relationship to the visited policy control network element based on the message.

With reference to the third aspect, in some implementations of the third aspect, the method further includes: The home policy control network element sends the user route selection policy to the visited policy control network element. The visited policy control network element is further configured to send the user route selection policy to the visited mobility management network element.

According to a fourth aspect, a communication method is provided, including: A first network element sends first information to a second network element, where the first information includes identification information of a first network, first network slice identification information of a visited network, and identification information of a network slice to which a terminal device subscribes; and the first network element receives second information from the second network element, where the second information includes a mapping relationship between second network slice identification information of the visited network and first network slice identification information of a home network, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device. The first network element and the second network element belong to the home network, and the first network is the visited network; or the first network element and the second network element belong to the visited network, and the first network is the home network. The second information is determined by the second network element based on the first information. That the second network slice identification information of the visited network is the subset of the first network slice identification information of the visited network may be explained as follows: The second network slice identification information of the visited network includes some or all information in the first network slice identification information of the visited network. That the first network slice identification information of the home network is the subset of the identification information of the network slice to which the terminal device subscribes may be explained as follows: The first network slice identification information of the home network includes some or all information in the identification information of the network slice to which the terminal device subscribes.

According to the technical solution of this application, a mapping relationship between visited network slice identification information of the terminal device and home network slice identification information of the terminal device can be obtained. This helps generate the URSP for the terminal device, so that the terminal device successfully accesses the service of the visited network.

With reference to the fourth aspect, in some implementations of the fourth aspect, the URSP includes the second network slice identification information of the visited network. In this way, the terminal device can directly determine the mapping relationship between the visited network slice identification information and the home network slice identification information according to the URSP.

With reference to the fourth aspect, in some implementations of the fourth aspect, the first network element and the second network element belong to the home network, and the method further includes: The first network element receives third information from a third network element, where the third network element belongs to the visited network, and the third information includes the first network slice identification information of the visited network; the first network element determines the user route selection policy URSP of the terminal device based on the second information and the third information, where the URSP is to be used by the terminal device to access a service of the visited network; and the first network element sends the URSP to the third network element.

With reference to the fourth aspect, in some implementations of the fourth aspect, the method further includes: The first network element receives fourth information, where the fourth information indicates updated identification information of the network slice to which the terminal device subscribes; and the first network element sends fifth information to the second network element, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

According to the technical solution of this application, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

With reference to the fourth aspect, in some implementations of the fourth aspect, the first network element is a policy control network element belonging to the home network, the second network element is a network slice selection network element belonging to the home network or a mobility management network element belonging to the home network, and the third network element is a policy control network element belonging to the visited network.

With reference to the fourth aspect, in some other implementations of the fourth aspect, the first network element and the second network element belong to the visited network, and the method further includes: The first network element sends the second information to a fourth network element, where the fourth network element belongs to the home network; and the first network element receives the user route selection policy URSP of the terminal device from the fourth network element, where the URSP is to be used by the terminal device to access a service of the visited network.

With reference to the fourth aspect, in some other implementations of the fourth aspect, the method further includes: The first network element receives third information from a third network element, where the third network element belongs to the visited network, and the third information includes the identification information of the network slice to which the terminal device subscribes.

With reference to the fourth aspect, in some other implementations of the fourth aspect, the method further includes: The first network element receives fourth information from the third network element, where the third network element belongs to the visited network, and the fourth information includes updated identification information of the network slice to which the terminal device subscribes; and the first network element sends fifth information to the second network element, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

With reference to the fourth aspect, in some other implementations of the fourth aspect, the first network element is a policy control network element belonging to the visited network, the second network element is a network slice selection network element or a mobility management network element belonging to the visited network, the third network element is a mobility management network element belonging to the visited network, and the fourth network element is a policy control network element belonging to the home network.

According to a fifth aspect, a communication method is provided, including: A second network element receives first information from a first network element, where the first information includes identification information of a first network, first network slice identification information of a visited network, and identification information of a network slice to which a terminal device subscribes; and the second network element sends second information to the first network element, where the second information includes a mapping relationship between second network slice identification information of the visited network of the terminal device and first network slice identification information of a home network of the terminal device, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device. The first network element and the second network element belong to the home network of the terminal device, and the first network is the visited network of the terminal device; or the first network element and the second network element belong to the visited network of the terminal device, and the first network is the home network of the terminal device.

According to the technical solution of this application, a mapping relationship between visited network slice identification information of the terminal device and home network slice identification information of the terminal device can be obtained. This helps generate the URSP for the terminal device, so that the terminal device successfully accesses the service of the visited network.

With reference to the fifth aspect, in some implementations of the fifth aspect, the URSP includes the second network slice identification information of the visited network.

With reference to the fifth aspect, in some implementations of the fifth aspect, the first network element and the second network element belong to the home network, and the method further includes: The second network element determines the second information based on the first information.

With reference to the fifth aspect, in some implementations of the fifth aspect, the method further includes: The second network element receives fifth information from the first network element, where the fifth information includes updated identification information of the network slice to which the terminal device subscribes; and the second network element sends sixth information to the first network element, where the sixth information includes a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

With reference to the fifth aspect, in some implementations of the fifth aspect, the first network element is a policy control network element belonging to the home network, and the second network element is a network slice selection network element or a mobility management network element belonging to the home network.

With reference to the fifth aspect, in some other implementations of the fifth aspect, the first network element is a policy control network element belonging to the visited network, and the second network element is a network slice selection network element or a mobility management network element belonging to the visited network.

According to a sixth aspect, a communication method is provided, including: A first network element sends first information to a second network element, where the first information includes identification information of a home network and first network slice identification information of a visited network, and the first network element and the second network element belong to the visited network; and the first network element receives second information from the second network element, where the second information includes a mapping relationship between the first network slice identification information of the visited network and first network slice identification information of the home network.

According to the technical solution of this application, a mapping relationship between visited network slice identification information and home network slice identification information can be obtained. This helps generate a URSP for a terminal device, so that the terminal device successfully accesses a service of the visited network.

With reference to the sixth aspect, in some implementations of the sixth aspect, the method further includes: The first network element sends the second information to a third network element, where the third network element belongs to the home network; and the first network element receives, from the third network element, a user route selection policy URSP that is of a terminal device and that is determined based on the second information, where the URSP is to be used by the terminal device to access a service of the visited network.

With reference to the sixth aspect, in some implementations of the sixth aspect, the URSP includes second network slice identification information of the visited network of the terminal device, and the second network slice identification information of the visited network is a subset of the first network slice identification information of the visited network.

With reference to the sixth aspect, in some implementations of the sixth aspect, the method further includes: The first network element sends third information to the third network element, where the third information includes the first network slice identification information of the visited network of the terminal device.

With reference to the sixth aspect, in some implementations of the sixth aspect, the first network element is a policy control network element belonging to the visited network, the second network element is a network slice selection network element or a mobility management network element belonging to the visited network, and the third network element is a policy control network element belonging to the home network.

According to a seventh aspect, a communication method is provided, including: A third network element receives second information from a first network element, where the second information includes a mapping relationship between first network slice identification information of a visited network and first network slice identification information of a home network, the third network element belongs to the home network, and the first network element belongs to the visited network; and the third network element sends a user route selection policy URSP of a terminal device to the first network element, where the URSP is to be used by the terminal device to access a service of the visited network.

According to the technical solution of this application, a mapping relationship between visited network slice identification information and home network slice identification information can be obtained. This helps generate the URSP for the terminal device, so that the terminal device successfully accesses the service of the visited network.

With reference to the seventh aspect, in some implementations of the seventh aspect, the method further includes: The third network element obtains identification information of a network slice to which the terminal device subscribes; and the third network element determines the URSP of the terminal device based on the second information and the identification information of the network slice to which the terminal device subscribes, where the URSP includes second network slice identification information of the visited network of the terminal device, and the second network slice identification information of the visited network is a subset of the first network slice identification information of the visited network.

With reference to the seventh aspect, in some implementations of the seventh aspect, the method further includes: The third network element obtains updated identification information of the network slice to which the terminal device subscribes; and the third network element determines an updated URSP of the terminal device based on the second information and the updated identification information of the network slice to which the terminal device subscribes.

With reference to the seventh aspect, in some implementations of the seventh aspect, the method further includes: The third network element sends the updated URSP of the terminal device to the first network element.

With reference to the seventh aspect, in some implementations of the seventh aspect, the first network element is a policy control network element belonging to the visited network, the second network element is a network slice selection network element or a mobility management network element belonging to the visited network, and the third network element is a policy control network element belonging to the home network.

According to an eighth aspect, a communication apparatus is provided, configured to implement the foregoing method. The communication apparatus may be a policy control entity in the first aspect to the seventh aspect, or an apparatus including the policy control entity; or the communication apparatus may be a network slice selection entity or a mobility management entity in the first aspect to the seventh aspect, or an apparatus including the network slice selection entity or the mobility management entity. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the eighth aspect, in some possible implementations, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects. The processing module may be, for example, a processor.

With reference to the eighth aspect, in some possible implementations, the transceiver module includes a sending module and a receiving module, respectively configured to implement the sending function and the receiving function in any one of the foregoing aspects and any one of the possible implementations of the foregoing aspects.

According to a ninth aspect, a communication apparatus is provided, including a processor. The processor is configured to: be coupled to a memory, and after reading instructions in the memory, perform the method in any one of the foregoing aspects according to the instructions. The communication apparatus may be a policy control entity in the first aspect to the seventh aspect, or an apparatus including the policy control entity; or the communication apparatus may be a network slice selection entity or a mobility management entity in the first aspect to the seventh aspect, or an apparatus including the network slice selection entity or the mobility management entity.

With reference to the ninth aspect, in a possible implementation, the communication apparatus further includes the memory. The memory is configured to store necessary program instructions and data.

With reference to the ninth aspect, in a possible implementation, the communication apparatus is a chip or a chip system. Optionally, when the communication apparatus is the chip system, the communication apparatus may include a chip, or may include a chip and another discrete component.

According to a tenth aspect, a communication apparatus is provided, including a processor and an interface circuit. The interface circuit is configured to receive a computer program or instructions and transmit the computer program or the instructions to the processor. The processor is configured to execute the computer program or the instructions, so that the communication apparatus performs the method in any one of the foregoing aspects.

With reference to the tenth aspect, in a possible implementation, the communication apparatus is a chip or a chip system. Optionally, when the communication apparatus is the chip system, the communication apparatus may include a chip, or may include a chip and another discrete component.

According to an eleventh aspect, a communication system is provided, including the first network element and the second network element in the fourth aspect. The first network element is configured to send first information to the second network element, where the first information includes identification information of a first network, first network slice identification information of a visited network, and identification information of a network slice to which a terminal device subscribes. The second network element is configured to send second information to the first network element, where the second information includes a mapping relationship between second network slice identification information of the visited network and first network slice identification information of a home network, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device. The first network element and the second network element belong to the home network of the terminal device, and the first network is the visited network of the terminal device; or the first network element and the second network element belong to the visited network of the terminal device, and the first network is the home network of the terminal device.

With reference to the eleventh aspect, in some implementations of the eleventh aspect, the first network element is a policy control network element belonging to the home network, the second network element is a network slice selection network element or a mobility management network element belonging to the home network, the system further includes a third network element, and the third network element is a policy control network element belonging to the visited network. The third network element is configured to send third information to the first network element, where the third information includes the first network slice identification information of the visited network of the terminal device. The first network element sends the user route selection policy URSP of the terminal device to the third network element, where the URSP is to be used by the terminal device to access a service of the visited network.

With reference to the eleventh aspect, in some other implementations of the eleventh aspect, the first network element is a policy control network element belonging to the visited network, the second network element is a network slice selection network element or a mobility management network element belonging to the visited network, the system further includes a third network element, and the third network element is a mobility management network element belonging to the visited network. The third network element is configured to send fourth information to the first network element, where the fourth information includes updated identification information of the network slice to which the terminal device subscribes. The first network element is further configured to send fifth information to the second network element, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

With reference to the eleventh aspect, in some other implementations of the eleventh aspect, the system further includes a fourth network element, and the fourth network element is a policy control network element belonging to the home network. The fourth network element is configured to receive the second information from the first network element, and send the user route selection policy URSP of the terminal device to the first network element, where the URSP is to be used by the terminal device to access the service of the visited network.

According to a twelfth aspect, a communication system is provided. The communication system includes the first network element and the second network element in the sixth aspect. The first network element and the second network element belong to a visited network. The first network element is configured to send first information to the second network element, where the first information includes identification information of a home network and first network slice identification information of the visited network. The second network element is configured to send second information to the first network element, where the second information includes a mapping relationship between the first network slice identification information of the visited network and first network slice identification information of the home network.

With reference to the twelfth aspect, in some implementations of the twelfth aspect, the system further includes a third network element, and the third network element belongs to the home network. The third network element is configured to: receive the second information from the first network element, where the second information includes the mapping relationship between the first network slice identification information of the visited network and the first network slice identification information of the home network, the third network element belongs to the home network, and the first network element belongs to the visited network; and send a user route selection policy URSP of a terminal device to the first network element, where the URSP is to be used by the terminal device to access a service of the visited network. The third network element is further configured to: obtain identification information of a network slice to which the terminal device subscribes, and determine the URSP of the terminal device based on the second information and the identification information of the network slice to which the terminal device subscribes.

According to a thirteenth aspect, a computer program product is provided. The computer program product includes computer program code, and when the computer program code is run on a computer, the computer is enabled to perform the method in the foregoing aspects.

It should be noted that all or some of the computer program code may be stored in a first storage medium. The first storage medium may be packaged together with a processor, or may be packaged separately from a processor. This is not specifically limited in embodiments of this application.

According to a fourteenth aspect, a computer-readable medium is provided. The computer-readable medium stores program code, and when the computer program code is run on a computer, the computer is enabled to perform the method in the foregoing aspects.

According to a fifteenth aspect, a chip system is provided, including a memory and a processor. The memory is configured to store a computer program, and the processor is configured to invoke the computer program from the memory and run the computer program, so that a communication device in which the chip system is installed performs the method in any one of the first aspect to the seventh aspect and the possible implementations of the first aspect to the seventh aspect.

The chip system may include an input chip or interface configured to send information or data, and an output chip or interface configured to receive information or data.

### BRIEF DESCRIPTION OF DRAWINGS

FIG. 1 is a schematic diagram of a system architecture according to an embodiment of this application;
FIG. 2 is a schematic diagram of an example of a communication system to which this application is applicable;
FIG. 3 is a schematic diagram of an example of a service-oriented architecture of a 5G system to which this application is applicable;
FIG. 4 is a schematic diagram of an example of a roaming scenario to which this application is applicable;
FIG. 5 is a schematic flowchart of an example of a communication method according to this application;
FIG. 6 is a schematic flowchart of a first specific example of a communication method according to this application;
FIG. 7 is a schematic flowchart of a second specific example of a communication method according to this application;
FIG. 8 is a schematic flowchart of a third specific example of a communication method according to this application;
FIG. 9 is a schematic flowchart of another example of a communication method according to this application;
FIG. 10 is a schematic flowchart of a fourth specific example of a communication method according to this application;
FIG. 11 is a schematic flowchart of a fifth specific example of a communication method according to this application;
FIG. 12 is a schematic flowchart of a sixth specific example of a communication method according to this application;
FIG. 13 is a schematic flowchart of a seventh specific example of a communication method according to this application;
FIG. 14 is a schematic block diagram of an example of a communication device according to this application; and
FIG. 15 is a schematic block diagram of an example of a communication apparatus according to this application.

### DESCRIPTION OF EMBODIMENTS

The following describes technical solutions of this application with reference to accompanying drawings.

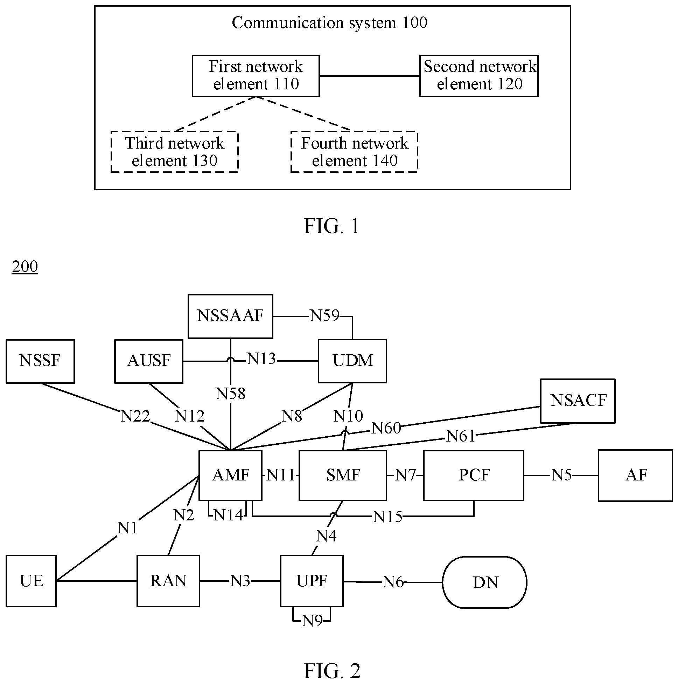

FIG. 1 is a schematic diagram of a communication system according to this application. As shown in FIG. 1, the system includes a first network element 110 and a second network element 120. Optionally, the system 100 may further include a third network element 130 and a fourth network element 140. The system 100 may be configured to perform a communication method in embodiments of this application.

The first network element 110 is configured to: send first information to the second network element 120, where the first information includes identification information of a first network, first network slice identification information of a visited network, and identification information of a network slice to which a terminal device subscribes; and receive second information from the second network element 120, where the second information includes a mapping relationship between second network slice identification information of the visited network and first network slice identification information of a home network, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device. That the second network slice identification information of the visited network is the subset of the first network slice identification information of the visited network may be explained as follows: The second network slice identification information of the visited network includes some or all information in the first network slice identification information of the visited network. That the first network slice identification information of the home network is the subset of the identification information of the network slice to which the terminal device subscribes may be explained as follows: The first network slice identification information of the home network includes some or all information in the identification information of the network slice to which the terminal device subscribes.

The second network element 120 is configured to: receive the first information from the first network element 110, and send the second information to the first network element 110.

The first network element and the second network element belong to the home network, and the first network is the visited network; or the first network element and the second network element belong to the visited network, and the first network is the home network.

Optionally, the third network element 130 is configured to send third information to the first network element 110, where the third information includes the first network slice identification information of the visited network.

Optionally, the fourth network element 140 is configured to: receive the second information from the first network element 110, and send the user route selection policy URSP of the terminal device to the first network element 110, where the URSP is to be used by the terminal device to access a service of the visited network.

For example, according to the communication system provided in this application, a mapping relationship between visited network slice identification information of the terminal device and home network slice identification information of the terminal device can be obtained. This helps generate the URSP for the terminal device, so that the terminal device successfully accesses the service of the visited network.

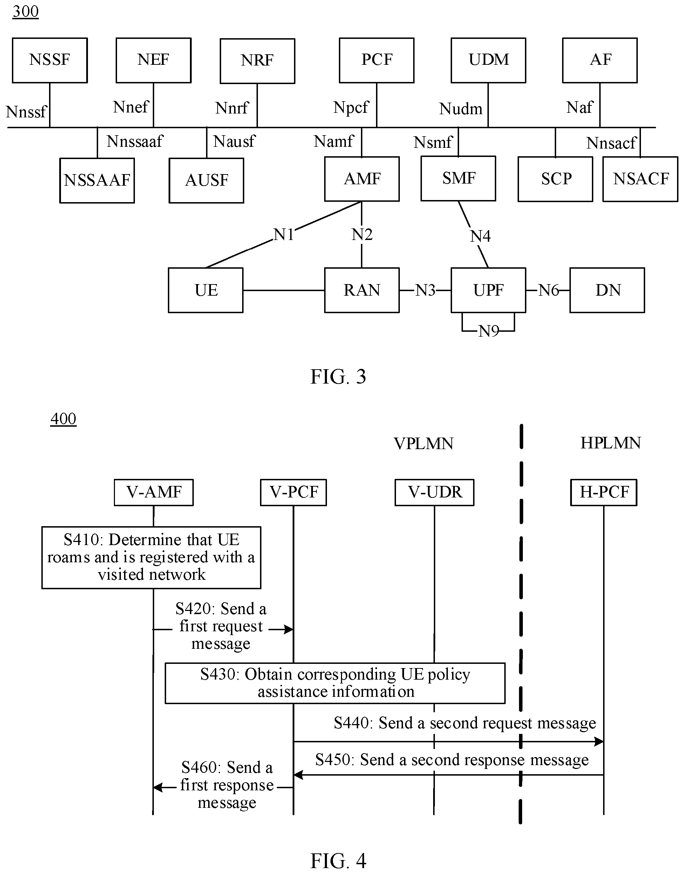

The system 100 shown in FIG. 1 may be applied to a 5th generation (5th generation, 5G) network architecture shown in FIG. 2 or FIG. 3, and certainly may also be applied to a future network architecture, for example, a 6th generation (6th generation, 6G) network architecture. This is not specifically limited in embodiments of this application.

For example, it is assumed that the communication system shown in FIG. 1 is applied to the 5G network shown in FIG. 2 or FIG. 3. In a possible implementation, the first network element 110 may be a policy control network element belonging to the home network (H-PCF), the second network element 120 is a network slice selection network element belonging to the home network (HPLMN network slice selection function, H-NSSF) or a mobility management network element belonging to the home network (HPLMN access and mobility management function, H-AMF), and the third network element 130 is a policy control network element belonging to the visited network (V-PCF). In this implementation, the fourth network element 140 does not exist. In another possible implementation, the first network element 110 may be a policy control network element belonging to the visited network (V-PCF), the second network element 120 is a network slice selection network element belonging to the visited network (V-NSSF), the third network element 130 is a mobility management network element belonging to the visited network (V-AMF), and the fourth network element 140 is a policy control network element belonging to the home network (H-PCF).

The following describes 5G systems in different scenarios by using examples with reference to FIG. 2 and FIG. 3. It should be understood that the 5G systems described in this specification are merely examples, and should not constitute any limitation on this application.

FIG. 2 is a schematic diagram of an architecture of a basic 5G system 200. As shown in FIG. 2, the system 200 includes a PCF, an AMF, a session management function (session management function, SMF), a radio access network (radio access network, RAN), a unified data management (unified data management, UDM), a data network (data network, DN), a user plane function (user plane function, UPF), UE, an application function (application function, AF), a network slice selection function (network slice selection function, NSSF), an authentication server function (authentication server function, AUSF), and/or the like. Optionally, FIG. 2 may further include the following functions (not shown in FIG. 2): a unified data repository (unified data repository, UDR), a network exposure function (network exposure function, NEF), or a network repository function (NF repository function, NRF).

Main functions of the network elements are described as follows.

### 1. Terminal device

The terminal device in embodiments of this application may be user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice and data connectivity for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving or autopilot), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs. In addition, in embodiments of this application, the terminal device may alternatively be a terminal device in an internet of things (internet of things, IoT) system.

### 2. Radio access network RAN

The radio access network is an access network that implements a network access function based on a wireless communication technology. The radio access network can manage a radio resource, provide a radio access service or an air interface access service for a terminal, and forward a control signal and user data between the terminal and a core network.

By way of example and not limitation, the radio access network may be an evolved NodeB (evolved NodeB, eNB or eNodeB) in an LTE system, or may be a radio controller in a cloud radio access network (cloud radio access network, CRAN) scenario, or the access device may be a relay station, an access point, a vehicle-mounted device, a wearable device, an access device in a 5G network, an access device in a future evolved PLMN network, an access point (access point, AP) in a WLAN, or a gNB in an NR system. This is not limited in embodiments of this application.

### 3. Access and mobility management function network element AMF

The access and mobility management function network element is mainly used for mobility management, access management, and the like, may be configured to implement another function in a mobility management entity (mobility management entity, MME) function other than session management, for example, a function such as lawful interception or access authorization (or authentication), and is further configured to transfer a user policy between UE and a PCF. In embodiments of this application, the access and mobility management function network element may be configured to implement a function of an access and mobility management network element.

### 4. Session management function network element SMF

The session management function network element is mainly used for session management, internet protocol (internet protocol, IP) address allocation and management of a terminal device, user plane function (user plane function, UPF) network element selection, a termination point of a policy control and charging function interface, downlink data notification, and the like. In embodiments of this application, the session management function network element may be configured to implement a function of a session management network element.

### 5. User plane function network element UPF

The user plane function network element may be used for packet routing and forwarding, QoS parameter processing of user plane data, or the like. User data can reach a data network (data network, DN) through this network element. In embodiments of this application, the user plane function network element may be configured to implement a function of a user plane network element. For example, when a session is created on different UPFs, service experience of UE is also different. Therefore, an SMF needs to select an appropriate UPF for the session of the UE.

### 6. Policy control network element PCF

The policy control network element is configured to: guide a unified policy framework of network behavior, provide policy rule information for a control plane function network element (for example, an AMF network element or an SMF network element), and the like. The policy control network element is mainly responsible for policy control functions such as charging for a session level and a service flow level, QoS bandwidth assurance and mobility management, and UE policy decision.

### 7. Network exposure function network element NEF

The network exposure function network element is configured to expose, to the outside, service and network capability information (such as a terminal location and whether a session is reachable) provided by a 3GPP network function, and the like.

### 8. Application function network element AF

The application function network element is mainly configured to transfer a requirement of an application side for a network side, for example, a QoS requirement or a user status event subscription. The AF may be a third-party function entity or an application service deployed by an operator, for example, an IMS voice call service. When an application function entity of a third-party application interacts with a core network, an NEF may further perform authorization processing. For example, the third-party application function directly sends a request message to the NEF, and the NEF determines whether the AF is allowed to send the request message, and if verification succeeds, forwards the request message to a corresponding PCF or unified data management UDM.

### 9. Unified data management network element UDM

The unified data management network element is mainly used for unified data management, and supports authentication trust status processing in a 3GPP authentication and key agreement mechanism, user identity processing, access authorization, registration and mobility management, subscription management, SMS message management, and the like.

### 10. Unified data repository network element UDR

The unified data repository network element is mainly used for an access function of data of types such as subscription data, policy data, and application data.

In the preceding architecture, functions of interfaces are described as follows.

N7: represents an interface between the PCF and SMF, and is configured to deliver a control policy at a PDU session granularity and a control policy at a service data flow granularity.

N15: represents an interface between the PCF and the AMF, and is configured to deliver a UE policy and an access control related policy.

N5: represents an interface between the AF and the PCF, and is configured to deliver an application service request and report a network event.

N4: represents an interface between the SMF and the UPF, and is configured to transfer information between a control plane and a user plane, including delivery of a forwarding rule, a QoS control rule, a traffic statistics rule, and the like from the control plane to the user plane, and reporting of user plane information.

N11: represents an interface between the SMF and the AMF, and is configured to: transfer PDU session tunnel information between the RAN and the UPF, transfer a control message to be sent to the UE, transfer radio resource control information to be sent to the RAN, and so on.

N2: represents an interface between the AMF and the RAN, and is configured to: transfer radio bearer control information from a core network side to the RAN, and so on.

N1: represents an interface between the AMF and the UE, is access-irrelevant, and is configured to: transmit a QoS control rule to the UE, and so on.

N8: represents an interface between the AMF and the UDM, and is used by the AMF to obtain, from the UDM, subscription data related to access and mobility management and authentication data, and used by the AMF to register current mobility management related information of the UE with the UDM.

N10: represents an interface between the SMF and the UDM, and is used by the SMF to obtain, from the UDM, subscription data related to session management, and used by the SMF to register current session related information of the UE with the UDM.

In addition, although not shown in FIG. 2, the UDR may further have direct interfaces to the PCF and the UDM, which are respectively corresponding to an N36 interface and an N35 interface. The N36 interface is used by the PCF to obtain policy related subscription data and application data related information from the UDR, and the N35 interface is used by the UDM to obtain user subscription data information from the UDR.

It should be understood that the foregoing network architecture applied to embodiments of this application is merely an example of a network architecture described from the perspective of a conventional point-to-point architecture and a service-oriented architecture, and a network architecture applicable to embodiments of this application is not limited thereto. Any network architecture that can implement functions of the foregoing network elements is applicable to embodiments of this application.

It should be understood that names of the interfaces between the network elements in FIG. 2 are merely examples, and the interfaces may have other names during specific implementation. This is not specifically limited in this application. In addition, names of messages (or signaling) transmitted between the foregoing network elements are merely examples, and do not constitute any limitation on functions of the messages.

It should be noted that the network element may also be referred to as an entity, a device, an apparatus, a module, or the like. This is not particularly limited in this application. In addition, in this application, for ease of understanding and description, the network element is omitted in some descriptions. For example, an SMF network element is referred to as an SMF for short. In this case, the "SMF" should be understood as the SMF network element. Descriptions of a same or similar case are omitted below.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be implemented by a plurality of devices, or may be one functional module in one device. This is not specifically limited in embodiments of this application.

It should be further understood that, in the communication system shown in FIG. 2, functions of the constituent network elements are merely examples. When the constituent network elements are applied to embodiments of this application, not all the functions are necessary.

In addition, names of the network elements (such as the PCF and the AMF) included in FIG. 2 are merely names, and the names do not constitute a limitation on functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further noted that communication between network elements of the control plane function in FIG. 2 is described by using a non-service-oriented interface as an example, but does not constitute a limitation on the protection scope of embodiments of this application. A person skilled in the art may understand that the network elements of the control plane function in FIG. 2 may alternatively communicate with each other through a service-oriented interface. For example, an external service-oriented interface provided by the AMF may be Namf; a service-oriented interface provided by the SMF may be Nsmf; an external service-oriented interface provided by the UDM may be Nudm; a service-oriented interface provided by the AF may be Naf; and an external service-oriented interface provided by the PCF may be Npcf.

The network elements in FIG. 2 are an architecture based on a reference point, and do not constitute a limitation on embodiments of this application. FIG. 3 is a schematic diagram of an architecture based on a service-oriented interface. As shown in FIG. 3, the architecture includes an NSSF, an AUSF, a UDM, an NEF, an NRF, a PCF, an AF, an AMF, an SMF, UE, a RAN, a UPF, a DN, and/or the like. In FIG. 3, an external service-oriented interface provided by the NSSF may be Nnssf, an external service-oriented interface provided by the NEF may be Nnef, an external service-oriented interface provided by the NRF may be Nnrf, an external service-oriented interface provided by the AMF may be Namf, a service-oriented interface provided by the SMF may be Nsmf, an external service-oriented interface provided by the UDM may be Nudm, a service-oriented interface provided by the AF may be Naf, an external service-oriented interface provided by the PCF may be Npcf, an external service-oriented interface provided by the AUSF may be Nausf, an external service-oriented interface provided by the CHF may be Nchf, and an interface between a control plane function and either of the RAN and the UPF is a non-service-oriented interface. The UE is connected to the AMF through an N1 interface, and the UE is connected to the RAN by using the radio resource control (radio resource control, RRC) protocol. The RAN is connected to the AMF through an N2 interface, and the RAN is connected to the UPF through an N3 interface. The UPF is connected to the DN through an N6 interface, and the UPF is connected to the SMF through an N4 interface. For related descriptions, refer to a 5G system architecture (5G system architecture) in the standard. For brevity, a connection relationship in the architecture 300 is not described herein.

In the 5G era, hundreds of billions of internet of things devices access a network, different types of application scenarios have different requirements on the network, and some requirements may even conflict. Therefore, if a single network is used to provide services for different types of application scenarios at the same time, a network architecture is extremely complex, and network management efficiency and resource utilization are low. A 5G network slicing technology provides mutually isolated network environments for different application scenarios by virtualizing independent logical networks on a same network infrastructure, so that network functions and characteristics can be customized for the different application scenarios based on respective requirements, and quality of service (quality of service, QoS) requirements of different services can be effectively ensured.

When a network slice is deployed in a core network, if UE is initially attached to the network, a network slice selection process is triggered. The slice selection process depends on subscription data of the UE, local configuration information, a roaming agreement, a policy of an operator, and the like. In a network slice selection process, the foregoing parameters need to be comprehensively considered to select an optimal slice type for the UE.

Network slice identifiers include S-NSSAI and NSSAI. The S-NSSAI represents assistance information of a single slice, and usually includes a slice/service type (slice/service type, SST) and a slice differentiator (slice differentiator, SD). The SST is used for features of the slice in terms of characteristics and services. The SD is used to distinguish between different network slices with a same SST feature. The NSSAI is a set of pieces of S-NSSAI, and a plurality of network slices may be identified by using the NSSAI. In a 5G network, the NSSAI may be configured (configured) NSSAI, requested (requested) NSSAI, or allowed (allowed) NSSAI.

When the UE needs to access a slice, the UE may provide requested NSSAI for the core network, so that the core network selects a network slice instance for the UE. Specifically, the UE may provide, for the core network, network slice selection assistance information (NSSAI) including a group of parameters, and the core network selects a network slice instance for the UE.

A registration procedure of the UE may be briefly described as follows: The UE sends a registration request to an AMF through a RAN, the AMF obtains subscription data of the UE from a UDM based on a UE identifier, and the UDM may obtain the subscription data from a UDR after receiving the request. In addition, the AMF may separately initiate a user policy control create request (UE PolicyControl_Create) and an access management policy control create request (AM PolicyControl_Create) to a PCF, to separately obtain a UE policy and an access control policy. In this process, the PCF returns the UE policy and the access control policy to the AMF, and the AMF provides the UE policy and the access control policy for the UE.

A session creation procedure may be briefly described as follows: The UE sends a session creation request to an AMF through a RAN, the AMF selects an SMF for the session to provide a service for the session, the AMF stores a correspondence between the SMF and the PDU session and sends the session creation request to the SMF, the SMF selects a corresponding UPF for the UE and establishes a user plane transmission path, and the SMF allocates an IP address to the UE. In this process, the SMF further initiates a policy control session creation request to a PCF, to create a policy control session between the SMF and the PCF. In a policy control session creation process, the SMF stores a correspondence between the policy control session and the PDU session. In addition, an AF may create an AF session with the PCF, and the PCF binds the AF session to the policy control session.

FIG. 4 is a diagram of an example application scenario of a roaming scenario to which this application is applicable. The scenario includes at least an AMF, a PCF, and a UDR located in a VPLMN (which are respectively referred to as a V-AMF, a V-PCF, and a V-UDR for short), and a PCF located in an HPLMN (which is referred to as an H-PCF for short). In the architecture shown in FIG. 4, network elements may communicate with each other through a service-oriented interface. For details, refer to the descriptions in FIG. 2 or FIG. 3. For brevity, details are not described herein again.

S410: The V-AMF determines that UE roams and is registered with the VPLMN.

S420: The V-AMF sends a first request message to the V-PCF.

The first request message may be a user policy control create request message (Npcf_UEPolicyControl Create Request), and is used to request the V-PCF to create a UE policy association (UE Policy Association).

S430: The V-PCF obtains UE policy assistance information corresponding to a visited location.

The UE policy assistance information corresponding to the visited location may be VPLMN assistant UE policy information, and the information may include a DNN, an SSC mode, network slice information, and the like that are associated with an application deployed in the visited location. The network slice may be represented by VPLMN S-NSSAI in the visited location. The V-PCF may obtain the VPLMN assistant UE policy information in a plurality of manners. For example, the V-PCF may obtain the VPLMN assistant UE policy information from the V-UDR. For another example, the VPLMN assistant UE policy information is locally configured in the V-PCF.

S440: The V-PCF sends a second request message to the H-PCF.

The second request message may be a user policy control create request message (Npcf_UEPolicyControl Create Request), the message includes the VPLMN assistant UE policy information, and the second request message is used to request the H-PCF to create the UE policy association (UE Policy Association).

S450: The H-PCF sends a second response message to the V-PCF.

The second response message may be a user policy control create response message (Npcf_UEPolicyControl Create Response), and specifically includes a URSP generated by the H-PCF for the UE based on the VPLMN assistant UE policy information.

S460: The V-PCF sends a first response message to the V-AMF.

A form and included content of the first response message may be the same as those of the second response message, that is, the first response message includes the URSP.

It may be understood that, when the H-PCF receives the VPLMN assistant UE policy information, the H-PCF additionally considers information about the visited location to comprehensively generate the URSP. After the V-AMF sends the URSP to the UE, the UE may determine, according to the URSP, how to access a service deployed in the visited location.

However, because the network slice information included in the VPLMN assistant UE policy information is VPLMN S-NSSAI, if the H-PCF directly includes, in the URSP, the VPLMN S-NSSAI included in the VPLMN assistant UE policy information, the URSP includes both the VPLMN S-NSSAI and HPLMN S-NSSAI. Consequently, the UE cannot accurately identify which S-NSSAI is the visited S-NSSAI and which S-NSSAI is the HPLMN S-NSSAI. Therefore, the VPLMN S-NSSAI included in the URSP needs to be mapped to the HPLMN S-NSSAI that can be accurately identified by the UE.

Based on this, this application provides a communication method and apparatus, to obtain a mapping relationship between visited network slice identification information of UE and home network slice identification information of the UE. This helps generate a URSP for the UE, so that the UE successfully accesses a service of a visited network.

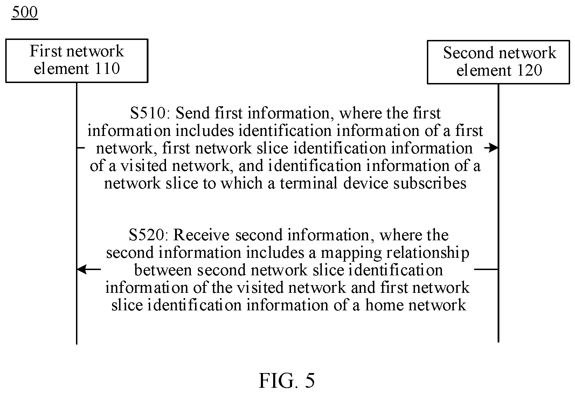

FIG. 5 is a schematic flowchart of an example of a communication method according to this application. With reference to the following steps, the communication method 500 is applied to the network architecture shown in FIG. 2 to FIG. 4.

S510: The first network element 110 sends first information to the second network element 120, where the first information includes identification information of a first network, first network slice identification information of a visited network, and identification information of a network slice to which a terminal device subscribes.

The first network element and the second network element belong to a home network, and the first network is the visited network; or the first network element and the second network element belong to the visited network, and the first network is a home network.

S520: The first network element 110 receives second information from the second network element 120, where the second information includes a mapping relationship between second network slice identification information of the visited network and first network slice identification information of the home network.

The second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device. That the second network slice identification information of the visited network is the subset of the first network slice identification information of the visited network may be explained as follows: The second network slice identification information of the visited network includes some or all information in the first network slice identification information of the visited network. That the first network slice identification information of the home network is the subset of the identification information of the network slice to which the terminal device subscribes may be explained as follows: The first network slice identification information of the home network includes some or all information in the identification information of the network slice to which the terminal device subscribes.

Optionally, the URSP includes the second network slice identification information of the visited network. In this way, the terminal device can directly determine a mapping relationship between visited network slice identification information and home network slice identification information according to the URSP.

In a possible implementation, the system in this application may further include the third network element 130 shown by a dashed line in FIG. 1, and does not include the fourth network element 140 shown by a dashed line in FIG. 1. When the first network element 110 is a policy control network element belonging to the home network, the second network element 120 is a network slice selection network element belonging to the home network or a mobility management network element belonging to the home network, and the third network element is a policy control network element belonging to the visited network, the first network element 110 may further receive third information from the third network element 130, where the third information includes the first network slice identification information of the visited network. The first network element determines the user route selection policy URSP of the terminal device based on the second information and the third information, where the URSP is to be used by the terminal device to access a service of the visited network. The first network element 110 may further send the URSP to the third network element 130.

Optionally, in the foregoing implementation, the first network element 110 may further receive fourth information, where the fourth information indicates updated identification information of the network slice to which the terminal device subscribes; and the first network element 110 sends fifth information to the second network element 120, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes. In this way, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

In another possible implementation, the system in this application may further include both the third network element 130 and the fourth network element 140 shown by dashed lines in FIG. 1. When the first network element 110 is a policy control network element belonging to the visited network, the second network element 120 is a network slice selection network element belonging to the visited network, the third network element 130 is a mobility management network element belonging to the visited network, and the fourth network element 140 is a policy control network element belonging to the home network, the first network element 110 may further receive third information from the third network element 130, where the third information includes the identification information of the network slice to which the terminal device subscribes. In this way, the first network element 110 may obtain the identification information of the network slice to which the terminal device subscribes, so as to filter the visited first network slice identification information based on the identification information of the network slice to which the terminal device subscribes, to obtain the visited second network slice identification information suitable for the terminal device.

Optionally, in the foregoing implementation, the first network element 110 receives fourth information from the third network element 130, where the third information includes updated identification information of the network slice to which the terminal device subscribes; and the first network element 110 sends fifth information to the second network element 120, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes. In this way, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

According to the technical solution of this application, the mapping relationship between the visited network slice identification information of the terminal device and the home network slice identification information of the terminal device can be obtained. This helps generate the URSP for the terminal device, so that the terminal device successfully accesses the service of the visited network.

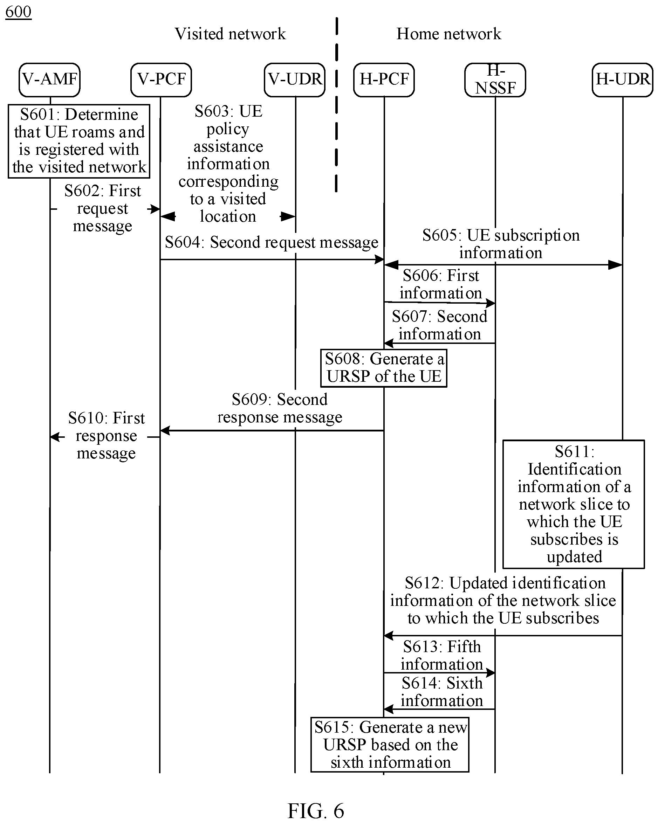

FIG. 6 is a schematic flowchart of a first specific example of a communication method according to this application. In the method shown in FIG. 6, the communication method provided in this embodiment of this application is presented by using an example in which the first network element 110 is a policy control network element belonging to a home network (H-PCF), the second network element 120 is a network slice selection network element belonging to the home network (H-NSSF), and the third network element 130 is a policy control network element belonging to a visited network (V-PCF). Alternatively, the second network element 120 may be a mobility management network element belonging to the home network (H-AMF). This is not limited in this application. In FIG. 6, only an example in which the second network element 120 is the network slice selection network element belonging to the home network (H-NSSF) is used for description.

S601: A V-AMF determines that UE roams and is registered with the visited network.

For registration of the UE with the visited network, refer to the conventional technology. Details are not described herein. For example, the visited network is VPLMN #1.

S602: The V-AMF sends a first request message to the V-PCF.

Specifically, the first request message may be a user policy control create request message (Npcf_UEPolicyControl Create Request), and is used to request the V-PCF to create a UE policy association (UE Policy Association). Both the V-AMF and the V-PCF are located in the visited network VPLMN #1. The first request includes a subscription permanent identifier, for example, a subscription permanent identifier (subscription permanent identifier, SUPI), of the UE.

S603: The V-PCF obtains UE policy assistance information corresponding to a visited location.

Specifically, the UE policy assistance information corresponding to the visited location may be VPLMN assistant UE policy information, and the information may include a DNN, an SSC mode, network slice information, and the like that are associated with an application deployed in the visited location. The network slice may be represented by VPLMN S-NSSAI in the visited location. The V-PCF may obtain the VPLMN assistant UE policy information from a V-UDR or from a local configuration. The VPLMN assistant UE policy information may include a DNN, an SSC mode, and network slice information that are associated with an application deployed in the VPLMN. The network slice identification information included in the VPLMN assistant UE policy information may be represented by VPLMN S-NSSAI.

**Table 1: UE policy assistance information corresponding to the visited location (VPLMN assistant UE policy information)**

| VPLMN ID | VPLMN assistant UE policy information | |
|---|---|---|
| | Application #1 | OSId and OSAppId |
| | | Route selection descriptors: |
| | | VPLMN #1 S-NSSAI #1 |
| | | DNN |
| | | SSC mode |
| | Application #2 | OSId and OSAppId |
| | | Route selection descriptors: |
| VPLMN #1 | | VPLMN #1 S-NSSAI #2 |
| | | DNN |
| | | SSC mode |
| | Application #3 | OSId and OSAppId |
| | | Route selection descriptors: |
| | | VPLMN #1 S-NSSAI #3 |
| | | DNN |
| | | SSC mode |

S604: The V-PCF sends a second request message to the H-PCF.

The second request message may be a user policy control create request message (Npcf_UEPolicyControl Create Request). The second request message is used to request to create the UE policy association (UE Policy Association). The second request message includes the UE policy assistance information corresponding to the visited location (VPLMN assistant UE policy information). For specific content of the information, refer to Table 1.

The V-PCF determines an HPLMN ID of the UE based on the subscription permanent identifier included in the first request message, and determines an identifier of the H-PCF based on the HPLMN ID. In addition, the second request message may further include an identifier of the V-PCF (V-PCF ID).

S605: The H-PCF obtains UE subscription information from an H-UDR.

In a possible implementation, the H-PCF may send a query request message (Nudr _Query Request) to the H-UDR. The query request message is used to query the UE subscription information from the H-UDR. Correspondingly, the H-UDR may send a query response message (Nudr _Query Response) to the H-PCF. The query response message includes the UE subscription information, and the UE subscription information includes information about a network slice to which the UE subscribes. The information about the network slice to which the UE subscribes includes HPLMN S-NSSAI. For example, the information about the network slice to which the UE subscribes may be HPLMN S-NSSAI #A and/or HPLMN S-NSSAI #B.

S606: The H-PCF sends first information to the H-NSSF.

Specifically, in a possible implementation, the H-PCF sends a request message to the H-NSSF. The request message may be a network slice mapping information request message (Slice mapping information Request) or a service-oriented operation Nnssf_NSSelection_Get Request. This is not limited in this application. The request message includes the first information. The first information includes identification information of the visited network (VPLMN ID), first network slice identification information of the visited network, and identification information of the network slice to which the UE subscribes (S-NSSAI).

The H-PCF may determine, based on step S604, an identifier of the network in which the V-PCF is located, to determine the identification information of the visited network (VPLMN ID). For example, according to the foregoing example, the V-PCF is located in VPLMN #1, and the VPLMN ID is VPLMN #1. The H-PCF may determine, based on step S604, the first network slice identification information of the visited network from the UE policy assistance information corresponding to the visited location (VPLMN assistant UE policy information). For example, when the V-PCF is located in VPLMN #1, as shown in Table 1, because VPLMN assistant UE policy information corresponding to VPLMN #1 includes VPLMN #1 S-NSSAI #1, VPLMN #2 S-NSSAI #2, and VPLMN #3 S-NSSAI #3, the H-PCF determines that the first network slice identification information of the visited network is VPLMN #1 S-NSSAI #1, VPLMN #2 S-NSSAI #2, and VPLMN #3 S-NSSAI #3.

The H-PCF may obtain the UE subscription information from the H-UDR based on step S605. The UE subscription information includes the information about the network slice to which the UE subscribes, and the information about the network slice to which the UE subscribes includes the HPLMN S-NSSAI. For example, the information about the network slice to which the UE subscribes may be HPLMN S-NSSAI #A and HPLMN S-NSSAI #B.

S607: The H-PCF receives second information from the H-NSSF.

The H-NSSF may store a network slice roaming agreement, including a slice mapping relationship between an HPLMN and a VPLMN. In an implementation, the network slice roaming agreement may be preconfigured in the H-NSSF. For example, a mapping relationship about network slice identification information between the HPLMN and the VPLMN may be shown in Table 2.

**Table 2: Mapping relationship about network slice identification information between the HPLMN and the VPLMN**

| VPLMN ID | Identification information of a network slice deployed in the visited PLMN | Mapping relationship about network slice identification information between the VPLMN and the HPLMN |
|---|---|---|
| VPLMN #1 | VPLMN #1 S-NSSAI #1 | VPLMN #1 S-NSSAI #1 <-> HPLMN S-NSSAI #A |
| | VPLMN #1 S-NSSAI #2 | |
| | VPLMN #1 S-NSSAI #3 | VPLMN #1 S-NSSAI #2 <-> HPLMN S-NSSAI #B |
| | | VPLMN #1 S-NSSAI #3 <-> HPLMN S-NSSAI #C |
| VPLMN #2 | VPLMN #2 S-NSSAI-1 | VPLMN #1 S-NSSAI #1 <-> HPLMN S-NSSAI #C |
| | VPLMN #2 S-NSSAI-2 | |
| | VPLMN #2 S-NSSAI-3 | VPLMN #1 S-NSSAI #2 <-> HPLMN S-NSSAI #C |
| | | VPLMN #1 S-NSSAI #3 <-> HPLMN S-NSSAI #C |

The H-NSSF may determine the second information based on the first information, where the second information includes a mapping relationship between second network slice identification information of the visited network and first network slice identification information of the home network.

Example 1: For example, the information about the network slice to which the UE subscribes may be HPLMN S-NSSAI #A and HPLMN S-NSSAI #B. When the VPLMN ID is VPLMN #1, the first network slice identification information of the visited network includes VPLMN #1 S-NSSAI #1, VPLMN #1 S-NSSAI #2, and VPLMN #1 S-NSSAI #3 (as shown in Table 1). When the identification information of the network slice to which the UE subscribes includes HPLMN S-NSSAI #A and HPLMN S-NSSAI #B, the H-NSSF may determine, based on Table 2, that VPLMN #1 S-NSSAI #1 can be mapped to HPLMN S-NSSAI #A, and VPLMN #1 S-NSSAI #2 can be mapped to HPLMN S-NSSAI #B. However, although VPLMN #1 S-NSSAI #3 can be mapped to HPLMN S-NSSAI #C, because the network slice to which the UE subscribes does not include HPLMN S-NSSAI #C, for the UE, the UE can access VPLMN #1 S-NSSAI #1 and VPLMN #1 S-NSSAI #2 in only VPLMN #1, but the UE is not allowed to access VPLMN #1 S-NSSAI #3 in VPLMN #1. In the example 1, the H-NSSF sends the mapping relationship between the second network slice identification information of the visited network and the first network slice identification information of the home network (that is, the second information) to the H-PCF. The second information includes a mapping relationship between VPLMN #1 S-NSSAI #1 and HPLMN S-NSSAI #A, and a mapping relationship between VPLMN #1 S-NSSAI #2 and HPLMN S-NSSAI #B. In other words, the second network slice identification information of the visited network is VPLMN #1 S-NSSAI #1 and VPLMN #1 S-NSSAI #2, and the first network slice identification information of the home network is HPLMN S-NSSAI #A and HPLMN S-NSSAI #B.

Example 2: For example, the information about the network slice to which the UE subscribes may be HPLMN S-NSSAI #A, HPLMN S-NSSAI #B, and HPLMN S-NSSAI #C. When the VPLMN ID is VPLMN #1, the first network slice identification information of the visited network includes VPLMN #1 S-NSSAI #1, VPLMN #1 S-NSSAI #2, and VPLMN #1 S-NSSAI #3 (as shown in Table 1). When the identification information of the network slice to which the UE subscribes includes HPLMN S-NSSAI #A, HPLMN S-NSSAI #B, and HPLMN S-NSSAI #C, the H-NSSF may determine, based on Table 2, that VPLMN #1 S-NSSAI #1 can be mapped to HPLMN S-NSSAI #A, VPLMN #1 S-NSSAI #2 can be mapped to HPLMN S-NSSAI #B, and VPLMN #1 S-NSSAI #3 can be mapped to HPLMN S-NSSAI #C. Therefore, for the UE, the UE is allowed to access VPLMN #1 S-NSSAI #1, VPLMN #1 S-NSSAI #2, and VPLMN #1 S-NSSAI #3 in VPLMN #1. In the example 2, the H-NSSF sends the mapping relationship between the second network slice identification information of the visited network and the first network slice identification information of the home network (that is, the second information) to the H-PCF. The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. In other words, the second network slice identification information of the visited network is VPLMN #1 S-NSSAI #1, VPLMN #1 S-NSSAI #2, and VPLMN #1 S-NSSAI #3, and the first network slice identification information of the home network is HPLMN S-NSSAI #A, HPLMN S-NSSAI #B, and HPLMN S-NSSAI #C.

Example 3: For example, the information about the network slice to which the UE subscribes may be HPLMN S-NSSAI #B. When the VPLMN ID is VPLMN #1, the first network slice identification information of the visited network includes VPLMN #1 S-NSSAI #1, VPLMN #1 S-NSSAI #2, and VPLMN #1 S-NSSAI #3 (as shown in Table 1). When the identification information of the network slice to which the UE subscribes includes only HPLMN S-NSSAI #B, the H-NSSF may determine, based on Table 2, that VPLMN #1 S-NSSAI #2 can be mapped to HPLMN S-NSSAI #B. However, although VPLMN #1 S-NSSAI #1 and VPLMN #1 S-NSSAI #3 can be mapped to HPLMN S-NSSAI #A and HPLMN S-NSSAI #C respectively, because the network slice to which the UE subscribes includes neither of HPLMN S-NSSAI #A and HPLMN S-NSSAI #C, for the UE, the UE can access VPLMN #1 S-NSSAI #2 in only VPLMN #1, but the UE is not allowed to access either of VPLMN #1 S-NSSAI #1 and VPLMN #1 S-NSSAI #3 in VPLMN #1. In the example 3, the H-NSSF sends the mapping relationship between the second network slice identification information of the visited network and the first network slice identification information of the home network (that is, the second information) to the H-PCF. The second information includes a mapping relationship between VPLMN #1 S-NSSAI #2 and HPLMN S-NSSAI #B. In other words, the second network slice identification information of the visited network is VPLMN #1 S-NSSAI #2, and the first network slice identification information of the home network is HPLMN S-NSSAI #B.

It can be learned from the foregoing example 1 to example 3 that the second network slice identification information of the visited network and the first network slice identification information of the home network that are included in the second information determined by the H-NSSF vary with the UE subscription information included in the first information. In the example 1, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #1 and VPLMN #1 S-NSSAI #2. Therefore, the second network slice identification information of the visited network is a subset of the first network slice identification information of the visited network. In the example 2, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #1, VPLMN #1 S-NSSAI #2, and VPLMN #1 S-NSSAI #3. Therefore, the second network slice identification information of the visited network is a universal set of first network slice identification information of the visited network. In embodiments of this application, the universal set is also a type of subset. Therefore, the second network slice identification information of the visited network may still be referred to as a subset of the first network slice identification information of the visited network. In the example 3, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #2. Therefore, the second network slice identification information of the visited network is a subset of the first network slice identification information of the visited network.

For another example, for the scenario in the example 1, a mapping relationship between the second network slice identification information of the visited network and the first network slice identification information of the home network may be shown in Table 3-1. For the scenario in the example 2, a mapping relationship between the second network slice identification information of the visited network and the first network slice identification information of the home network may be shown in Table 3-2. For the scenario in the example 3, a mapping relationship between the second network slice identification information of the visited network and the first network slice identification information of the home network may be shown in Table 3-3.

**Table 3-1: Mapping relationship between the second network slice identification information of the visited network and the first network slice identification information of the home network**

| Mapping relationship between the second network slice identification information of the visited network and the first network slice identification information of the home network |
|---|
| VPLMN #1 S-NSSAI #1 <-> HPLMN S-NSSAI #A |
| VPLMN #1 S-NSSAI #2 <-> HPLMN S-NSSAI #B |

**Table 3-2: Mapping relationship between the second network slice identification information of the visited network and the first network slice identification information of the home network**

| Mapping relationship between the second network slice identification information of the visited network and the first network slice identification information of the home network |
|---|
| VPLMN #1 S-NSSAI #1 <-> HPLMN S-NSSAI #A |
| VPLMN #1 S-NSSAI #2 <-> HPLMN S-NSSAI #B |
| VPLMN #1 S-NSSAI #3 <-> HPLMN S-NSSAI #C |

**Table 3-3: Mapping relationship between the second network slice identification information of the visited network and the first network slice identification information of the home network**

| Mapping relationship between the second network slice identification information of the visited network and the first network slice identification information of the home network |
|---|
| VPLMN #1 S-NSSAI #2 <-> HPLMN S-NSSAI #B |

After the H-NSSF determines the second information, the H-NSSF may send the second information to the H-PCF by using a response message. In an implementation, the response message may be a network slice mapping information response message (Slice mapping information Response) or a service-oriented operation Nnssf_NSSelection_Get Response. This is not limited in this application.

S608: The H-PCF generates a URSP of the UE.

The H-PCF obtains UE context policy control data (UE context policy control data) from the H-UDR. The UE context policy control data includes a DNN, an SSC mode, and network slice information that are associated with an application deployed in the HPLMN, as shown in Table 4-0. The network slice associated with the application deployed in the HPLMN is HPLMN S-NSSAI, for example, HPLMN S-NSSAI #B.

**Table 4-0: UE context policy control data**

| | | |
|---|---|---|
| HPLMN | Application #A | OSId and OSAppId |
| | | Route selection descriptors: |
| | | HPLMN S-NSSAI #B |
| | | DNN |
| | | SSC mode |

Specifically, the H-PCF may generate the URSP of the UE based on Table 4-0 and the second information.

For example, in the example 1, as shown in Table 3-1, the mapping relationship included in the second information is a mapping relationship between VPLMN #1 S-NSSAI #1 and HPLMN S-NSSAI #A, and a mapping relationship between VPLMN #1 S-NSSAI #2 and HPLMN S-NSSAI #B. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1 and application #2 associated with VPLMN #2 S-NSSAI #2. Because the second information does not include a mapping relationship related to VPLMN #1 S-NSSAI #3, the UE cannot access, in VPLMN #1, application #3 associated with VPLMN #1 S-NSSAI #3. Therefore, the generated URSP does not include application #3 associated with VPLMN #1 S-NSSAI #3. The generated URSP includes HPLMN S-NSSAI, for example, HPLMN S-NSSAI #A and HPLMN S-NSSAI #B. Optionally, the generated URSP may further include the second network slice identification information of the visited network, for example, VPLMN #1 S-NSSAI #1 and VPLMN #1 S-NSSAI #2. For example, in this example, information content included in the URSP may be shown in Table 4-1. Application #1 and application #2 are deployed in the VPLMN, application #A is deployed in the HPLMN, and network slice identification information associated with application #A is HPLMN S-NSSAI #B.

For another example, in the example 2, as shown in Table 3-2, the second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the second network slice identification information of the visited network, for example, VPLMN #1 S-NSSAI #1, VPLMN #1 S-NSSAI #2, and VPLMN #1 S-NSSAI #3. For example, in this example, information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

For another example, in the example 3, as shown in Table 3-3, the second information includes a mapping relationship between VPLMN #1 S-NSSAI #2 and HPLMN S-NSSAI #B. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #2 associated with VPLMN #1 S-NSSAI #2. The generated URSP includes HPLMN S-NSSAI, for example, HPLMN S-NSSAI #B. Optionally, the generated URSP may further include the second network slice identification information of the visited network, for example, VPLMN #1 S-NSSAI #2. For example, in this example, information content included in the URSP may be shown in Table 4-3. Application #2 is deployed in the VPLMN, application #A is deployed in the HPLMN, and network slice identification information associated with application #A is HPLMN S-NSSAI #B.

It can be learned from the foregoing examples that the URSP generated by the H-PCF varies with the mapping relationship included in the second information.

**Table 4-1: User route selection policy URSP**

| URSP rule | | |
|---|---|---|
| Rule #1 | Traffic descriptor #1 | |
| | Application #1 | OSId and OSAppId |
| | List of route selection descriptors | HPLMN S-NSSAI #A |
| | | (Optional) VPLMN #1 S-NSSAI #1 |
| | | DNN |
| | | SSC mode |
| Rule #2 | Traffic descriptor #2 | |
| | Application #2 | OSId and OSAppId |
| | List of route selection descriptors | HPLMN S-NSSAI #B |
| | | (Optional) VPLMN #1 S-NSSAI #2 |
| | | DNN |
| | | SSC mode |
| Rule #3 | Traffic descriptor #3 | |
| | Application #A | OSId and OSAppId |
| | List of route selection descriptors | HPLMN S-NSSAI #B |
| | | DNN |
| | | SSC mode |

**Table 4-2: User route selection policy URSP**

| URSP rule | | |
|---|---|---|
| Rule #1 | Traffic descriptor #1 | |
| | Application #1 | OSId and OSAppId |
| | List of route selection descriptors | HPLMN S-NSSAI #A |
| | | (Optional) VPLMN #1 S-NSSAI #1 |
| | | DNN |
| | | SSC mode |
| Rule #2 | Traffic descriptor #2 | |
| | Application #2 | OSId and OSAppId |
| | List of route selection descriptors | HPLMN S-NSSAI #B |
| | | (Optional) VPLMN #1 S-NSSAI #2 |
| | | DNN |
| | | SSC mode |
| Rule #3 | Traffic descriptor #3 | |
| | Application #3 | OSId and OSAppId |
| | List of route selection descriptors | HPLMN S-NSSAI #C |
| | | (Optional) VPLMN #1 S-NSSAI #3 |
| | | DNN |
| | | SSC mode |
| Rule #4 | Traffic descriptor #4 | |
| | Application #A | OSId and OSAppId |
| | List of route selection descriptors | HPLMN S-NSSAI #B |
| | | DNN |
| | | SSC mode |

**Table 4-3: User route selection policy URSP**

| URSP rule | | |
|---|---|---|
| Rule #1 | Traffic descriptor #1 | |
| | Application #2 | OSId and OSAppId |
| | List of route selection descriptors | HPLMN S-NSSAI #B |
| | | (Optional) VPLMN #1 S-NSSAI #2 |
| | | DNN |
| | | SSC mode |
| Rule #2 | Traffic descriptor #4 | |
| | Application #A | OSId and OSAppId |
| | List of route selection descriptors | HPLMN S-NSSAI #B |
| | | DNN |
| | | SSC mode |

S609: The H-PCF sends a second response message to the V-PCF.

The second response message may be a user policy control create response message (Npcf_UEPolicyControl Create Response message), and the second response message includes the URSP generated by the H-PCF. For example, the URSP generated by the H-PCF may be any one of Table 4-1, Table 4-2, and Table 4-3.

S610: The V-PCF sends a first response message to the V-AMF.

The first response message may be a user policy control create response message (Npcf_UEPolicyControl Create Response message), and the first response message includes the URSP generated by the H-PCF.

The V-AMF then sends the URSP to the UE, so that the UE accesses a service of the visited network. For example, for the foregoing example 1, the URSP generated by the H-PCF is

Table 4-1, and the UE may access, according to the URSP, application #1 and application #2 deployed in the visited location. For the foregoing example 2, the URSP generated by the H-PCF is Table 4-2, and the UE may access, according to the URSP, application #1, application #2, and application #3 deployed in the visited location. For the foregoing example 2, the URSP generated by the H-PCF is Table 4-3, and the UE may access, according to the URSP, application #2 deployed in the visited location. For access of the UE to the service of the visited network, refer to the conventional technology. Details are not described herein.

According to the technical solution of this application, a mapping relationship between visited network slice identification information of the terminal device and home network slice identification information of the terminal device can be obtained. This helps generate the URSP for the terminal device, so that the terminal device successfully accesses the service of the visited network.

Optionally, when the identification information of the network slice to which the UE subscribes changes, this embodiment may further include the following steps.

S611: The H-UDR determines that the identification information of the network slice to which the UE subscribes is updated.

Updated identification information of the network slice to which the UE subscribes is more or less than the non-updated identification information of the network slice to which the UE subscribes. This is not limited in embodiments of this application.

For example, in the example 1 described above, the identification information of the network slice to which the UE originally subscribes may be HPLMN S-NSSAI #A and HPLMN S-NSSAI #B, and the updated identification information of the network slice to which the UE subscribes may be only HPLMN S-NSSAI #B, may include HPLMN S-NSSAI #A, HPLMN S-NSSAI #B, and HPLMN S-NSSAI #C, or the like.

S612: The H-PCF receives, from the H-UDR, the updated identification information of the network slice to which the UE subscribes.

The H-PCF may receive a notification message (Nudr_DM_Notify) from the H-UDR. The notification message may include fourth information, and the fourth information includes the updated identification information of the network slice to which the UE subscribes. By way of example and not limitation, the updated identification information of the network slice to which the UE subscribes may be updated from HPLMN S-NSSAI #A and HPLMN S-NSSAI #B shown in the foregoing example 1 to HPLMN S-NSSAI #A, HPLMN S-NSSAI #B, and HPLMN S-NSSAI #C shown in the foregoing example 2, or to HPLMN S-NSSAI #B shown in the foregoing example 3.

S613: The H-PCF sends fifth information to the H-NSSF.

Specifically, for this process, refer to step S606. The fifth information includes the VPLMN ID, the first network slice identification information of the visited network, and the updated identification information of the network slice to which the UE subscribes. The fifth information is used to request a new mapping relationship (that is, a new mapping relationship between network slice identification information of the visited network and network slice identification information of the home network), and the new mapping relationship is determined based on the updated identification information of the network slice to which the UE subscribes.

In addition, the H-PCF may determine the VPLMN ID based on the identifier of the V-PCF, and the H-PCF may determine, based on step S604, the first network slice identification information of the visited network from the UE policy assistance information corresponding to the visited location (VPLMN assistant UE policy information). For specific descriptions, refer to the descriptions in step 606. Details are not described herein again.

S614: The H-PCF receives sixth information from the H-NSSF.

Specifically, the H-NSSF may determine the sixth information based on the fifth information and send the sixth information to the H-PCF. For the determining process, refer to the foregoing step S607. Details are not described herein again. The sixth information includes a mapping relationship between third network slice identification information of the visited network and second network slice identification information of the home network, and the mapping relationship is the new mapping relationship in S613.

Example A: The VPLMN ID is VPLMN #1, and the first network slice identification information of the visited network includes VPLMN #1 S-NSSAI #1, VPLMN #1 S-NSSAI #2, and VPLMN #1 S-NSSAI #3. When the updated identification information of the network slice to which the UE subscribes is updated from HPLMN S-NSSAI #A and HPLMN S-NSSAI #B shown in the example 1 to HPLMN S-NSSAI #A, HPLMN S-NSSAI #B, and HPLMN S-NSSAI #C shown in the example 2, the H-NSSF may determine, based on Table 2, that VPLMN #1 S-NSSAI #1 can be mapped to HPLMN S-NSSAI #A, VPLMN #1 S-NSSAI #2 can be mapped to HPLMN S-NSSAI #B, and VPLMN #1 S-NSSAI #3 can be mapped to HPLMN S-NSSAI #C. Therefore, for the UE, the UE is allowed to access VPLMN #1 S-NSSAI #1, VPLMN #1 S-NSSAI #2, and VPLMN #1 S-NSSAI #3 in VPLMN #1. The H-NSSF sends the mapping relationship between the third network slice identification information of the visited network and the second network slice identification information of the home network (that is, the sixth information) to the H-PCF. The sixth information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. In other words, the third network slice identification information of the visited network is VPLMN #1 S-NSSAI #1, VPLMN #1 S-NSSAI #2, and VPLMN #1 S-NSSAI #3, and the second network slice identification information of the home network is HPLMN S-NSSAI #A, HPLMN S-NSSAI #B, and HPLMN S-NSSAI #C. The third network slice identification information of the visited network is a subset of the first network slice identification information of the visited network, and the second network slice identification information of the home network is a subset of the updated identification information of the network slice to which the terminal device subscribes.

Example B: The VPLMN ID is VPLMN #1, and the first network slice identification information of the visited network includes VPLMN #1 S-NSSAI #1, VPLMN #1 S-NSSAI #2, and VPLMN #1 S-NSSAI #3. When the updated identification information of the network slice to which the UE subscribes is updated from HPLMN S-NSSAI #A and HPLMN S-NSSAI #B shown in the example 1 to HPLMN S-NSSAI #B shown in the example 3, the H-NSSF may determine, based on Table 2, that VPLMN #1 S-NSSAI #2 can be mapped to HPLMN S-NSSAI #B. However, although VPLMN #1 S-NSSAI #1 and VPLMN #1 S-NSSAI #3 can be mapped to HPLMN S-NSSAI #A and HPLMN S-NSSAI #C respectively, because the updated identification information of the network slice to which the UE subscribes includes neither of HPLMN S-NSSAI #A and HPLMN S-NSSAI #C, the third network slice identification information of the visited network may be VPLMN #1 S-NSSAI #2, and the second network slice identification information of the home network may be HPLMN S-NSSAI #B. The third network slice identification information of the visited network is a subset of the first network slice identification information of the visited network, and the second network slice identification information of the home network is a subset of the updated identification information of the network slice to which the terminal device subscribes.

It should be understood that the foregoing example A and example B are merely intended to show the technical solutions of this application, and should not be used as a limitation on the technical solutions of this application. It may be understood that the updated identification information of the network slice to which the UE subscribes may be one piece of network slice identification information or a combination of a plurality of pieces of network slice identification information. For example, the updated identification information of the network slice to which the UE subscribes may include only HPLMN S-NSSAI #A or only HPLMN S-NSSAI #B. For another example, the updated identification information of the network slice to which the UE subscribes may include HPLMN S-NSSAI #A and HPLMN S-NSSAI #B. For another example, the updated identification information of the network slice to which the UE subscribes may include HPLMN S-NSSAI #B and HPLMN S-NSSAI #C.

S614: The H-PCF generates a new URSP based on the sixth information.

Specifically, for this step, refer to the foregoing step S608.

For example, in the example A, the new mapping relationship included in the sixth information is a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the third network slice identification information of the visited network, for example, VPLMN #1 S-NSSAI #1, VPLMN #1 S-NSSAI #2, and VPLMN #1 S-NSSAI #3. For example, in this example, information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

For another example, in the example B, the new mapping relationship included in the sixth information is a mapping relationship between VPLMN #1 S-NSSAI #1 and HPLMN S-NSSAI #A. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1. The generated URSP includes HPLMN S-NSSAI, for example, HPLMN S-NSSAI#A. Optionally, the generated URSP may further include the third network slice identification information of the visited network, for example, VPLMN #1 S-NSSAI #1. For example, in this example, information content included in the URSP may be shown in Table 4-3. Application #1 is deployed in the VPLMN, application #A is deployed in the HPLMN, and network slice identification information associated with application #A is HPLMN S-NSSAI #B.

It should be understood that, although not shown in the figure, after generating the new URSP, the H-PCF may send the new URSP to the V-PCF by using a user policy control update notification request (Npcf_UEPolicyControl UpdateNotify Request), the V-PCF may further send the new URSP to the V-AMF by using a user policy control update notification request (Npcf_UEPolicyControl UpdateNotify Request), and the V-AMF sends the URSP to the UE, so that the UE accesses a service of the visited network. For example, the V-AMF sends the URSP to the UE by using a UE configuration update procedure.

According to the technical solution of this application, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

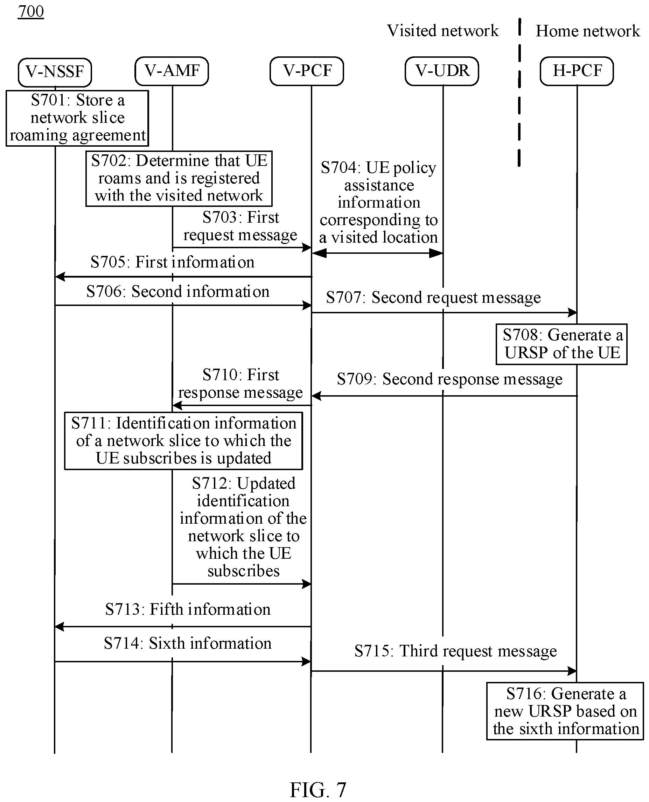

FIG. 7 is a schematic flowchart of a second specific example of a communication method according to this application. In the method shown in FIG. 7, the communication method provided in this embodiment of this application is presented by using an example in which the first network element 110 is a policy control network element belonging to a visited network (V-PCF), the second network element 120 is a network slice selection network element belonging to the visited network (V-NSSF), the third network element 130 is a mobility management network element belonging to the visited network (V-AMF), and the fourth network element 140 is a policy control network element belonging to a home network (H-PCF).

S701: The V-NSSF stores a network slice roaming agreement.

The network slice roaming agreement includes a mapping relationship about network slice identification information between an HPLMN and a VPLMN. For example, the mapping relationship about network slice identification information between the HPLMN and the VPLMN may be shown in Table 5.

**Table 5: Mapping relationship about network slice identification information between the HPLMN and the VPLMN**

| VPLMN ID | Identification information of a network slice deployed in the visited PLMN | Mapping relationship about network slice identification information between the VPLMN and the HPLMN |
|---|---|---|
| VPLMN #1 | VPLMN #1 S-NSSAI #1 | VPLMN #1 S-NSSAI #1 <-> HPLMN S-NSSAI #A |
| | | VPLMN #1 S-NSSAI #2 <-> HPLMN S-NSSAI #B |
| | VPLMN #1 S-NSSAI #2 | |
| | VPLMN #1 S-NSSAI #3 | VPLMN #1 S-NSSAI #3 <-> HPLMN S-NSSAI #C |

S702: A V-AMF determines that UE roams and is registered with the visited network.

S702 is the same as S601, and details are not described herein again.

S703: The V-AMF sends a first request message to the V-PCF.

The first request message may be a user policy control create request message (Npcf_UEPolicyControl Create Request), and is used to request the V-PCF to create a UE policy association (UE Policy Association). The first request message includes an SUPI of the UE and UE subscription information. The UE subscription information includes identification information of a network slice to which the UE subscribes, and the identification information of the network slice to which the UE subscribes includes HPLMN S-NSSAI. For example, the information about the network slice to which the UE subscribes may be HPLMN S-NSSAI #A and HPLMN S-NSSAI #B.

In addition, a method for obtaining the UE subscription information by the V-AMF is as follows: The V-AMF may send a query request message (Nudm_SDM_Get Request) to an H-UDM, where the query request message is used to query the UE subscription information from the H-UDM. Correspondingly, the H-UDM may send a query response message (Nudm_SDM_Get Response) to the V-AMF, where the query response message includes the UE subscription information.

S704: The V-PCF obtains UE policy assistance information corresponding to a visited location.

S704 is the same as S603, and details are not described herein again.

S705: The V-PCF sends first information to the V-NSSF.

Specifically, in a possible implementation, the V-PCF sends a request message to the V-NSSF. The request message may be a network slice mapping information request message (Slice mapping information Request) or a service-oriented operation Nnssf_NSSelection_Get Request. This is not limited in this application. The request message includes the first information. The first information includes identification information of the home network (HPLMN ID), first network slice identification information of the visited network, and the identification information of the network slice to which the UE subscribes (S-NSSAI).

The V-PCF may determine the identification information of the home network (HPLMN ID) of the UE by using the SUPI of the UE. For example, the HPLMN ID may be HPLMN #1. The V-PCF may determine, based on step S704, the first network slice identification information of the visited network from the UE policy assistance information corresponding to the visited location (VPLMN assistant UE policy information). For example, when the V-PCF is located in VPLMN #1, as shown in Table 1, VPLMN assistant UE policy information corresponding to VPLMN #1 includes VPLMN #1 S-NSSAI #1, VPLMN #1 S-NSSAI #2, and VPLMN #1 S-NSSAI #3. Therefore, the V-PCF determines that the first network slice identification information of the visited network is VPLMN #1 S-NSSAI #1, VPLMN #2 S-NSSAI #2, and VPLMN #3 S-NSSAI #3.

The V-PCF may determine, based on step S703, the identification information of the network slice to which the UE subscribes. The information about the network slice to which the UE subscribes includes the HPLMN S-NSSAI. For example, the information about the network slice to which the UE subscribes may be HPLMN S-NSSAI #A and HPLMN S-NSSAI #B.

S706: The V-PCF receives second information from the V-NSSF.

The V-NSSF may determine the second information based on the first information, where the second information includes a mapping relationship between second network slice identification information of the visited network and first network slice identification information of the home network.

Example a: For example, the identification information of the network slice to which the UE subscribes may be HPLMN S-NSSAI #A and HPLMN S-NSSAI #B. When the VPLMN ID is VPLMN #1, the first network slice identification information of the visited network may include VPLMN #1 S-NSSAI #1, VPLMN #1 S-NSSAI #2, and VPLMN #1 S-NSSAI #3 (as shown in Table 5). When the identification information of the network slice to which the UE subscribes includes HPLMN S-NSSAI #A and HPLMN S-NSSAI #B, the V-NSSF may determine, based on Table 5, that VPLMN #1 S-NSSAI #1 can be mapped to HPLMN S-NSSAI #A, and VPLMN #1 S-NSSAI #2 can be mapped to HPLMN S-NSSAI #B. However, although VPLMN #1 S-NSSAI #3 can be mapped to HPLMN S-NSSAI #C, because the network slice to which the UE subscribes does not include HPLMN S-NSSAI #C, for the UE, the UE can access VPLMN #1 S-NSSAI #1 and VPLMN #1 S-NSSAI #2 in only VPLMN #1, but the UE is not allowed to access VPLMN #1 S-NSSAI #3 in VPLMN #1. In the example a, the V-NSSF sends the mapping relationship between the second network slice identification information of the visited network and the first network slice identification information of the home network (that is, the second information) to the V-PCF. The second information includes a mapping relationship between VPLMN #1 S-NSSAI #1 and HPLMN S-NSSAI #A, and a mapping relationship between VPLMN #1 S-NSSAI #2 and HPLMN S-NSSAI #B. In other words, the second network slice identification information of the visited network is VPLMN #1 S-NSSAI #1 and VPLMN #1 S-NSSAI #2, and the first network slice identification information of the home network is HPLMN S-NSSAI #A and HPLMN S-NSSAI #B.

Example b: For example, the information about the network slice to which the UE subscribes may be HPLMN S-NSSAI #A, HPLMN S-NSSAI #B, and HPLMN S-NSSAI #C. When the VPLMN ID is VPLMN #1, the first network slice identification information of the visited network includes VPLMN #1 S-NSSAI #1, VPLMN #1 S-NSSAI #2, and VPLMN #1 S-NSSAI #3 (as shown in Table 5). When the identification information of the network slice to which the UE subscribes includes HPLMN S-NSSAI #A, HPLMN S-NSSAI #B, and HPLMN S-NSSAI #C, the V-NSSF may determine, based on Table 5, that VPLMN #1 S-NSSAI #1 can be mapped to HPLMN S-NSSAI #A, VPLMN #1 S-NSSAI #2 can be mapped to HPLMN S-NSSAI #B, and VPLMN #1 S-NSSAI #3 can be mapped to HPLMN S-NSSAI #C. Therefore, for the UE, the UE is allowed to access VPLMN #1 S-NSSAI #1, VPLMN #1 S-NSSAI #2, and VPLMN #1 S-NSSAI #3 in VPLMN #1. In the example b, the V-NSSF sends the mapping relationship between the second network slice identification information of the visited network and the first network slice identification information of the home network (that is, the second information) to the V-PCF. The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. In other words, the second network slice identification information of the visited network is VPLMN #1 S-NSSAI #1, VPLMN #1 S-NSSAI #2, and VPLMN #1 S-NSSAI #3, and the first network slice identification information of the home network is HPLMN S-NSSAI #A, HPLMN S-NSSAI #B, and HPLMN S-NSSAI #C.

Example c: For example, the information about the network slice to which the UE subscribes may be HPLMN S-NSSAI #B. When the VPLMN ID is VPLMN #1, the first network slice identification information of the visited network includes VPLMN #1 S-NSSAI #1, VPLMN #1 S-NSSAI #2, and VPLMN #1 S-NSSAI #3 (as shown in Table 5). When the identification information of the network slice to which the UE subscribes includes only HPLMN S-NSSAI #B, the V-NSSF may determine, based on Table 2, that VPLMN #1 S-NSSAI #2 can be mapped to HPLMN S-NSSAI #B. However, although VPLMN #1 S-NSSAI #1 and VPLMN #1 S-NSSAI #3 can be mapped to HPLMN S-NSSAI #A and HPLMN S-NSSAI #C respectively, because the network slice to which the UE subscribes includes neither of HPLMN S-NSSAI #A and HPLMN S-NSSAI #C, for the UE, the UE can access VPLMN #1 S-NSSAI #2 in only VPLMN #1, but the UE is not allowed to access either of VPLMN #1 S-NSSAI #1 and VPLMN #1 S-NSSAI #3 in VPLMN #1. In the example c, the V-NSSF sends the mapping relationship between the second network slice identification information of the visited network and the first network slice identification information of the home network (that is, the second information) to the V-PCF. The second information includes a mapping relationship between VPLMN #1 S-NSSAI #2 and HPLMN S-NSSAI #B. In other words, the second network slice identification information of the visited network is VPLMN #1 S-NSSAI #2, and the first network slice identification information of the home network is HPLMN S-NSSAI #B.

It can be learned from the foregoing example a to example c that the second network slice identification information of the visited network and the first network slice identification information of the home network that are included in the second information determined by the V-NSSF vary with the UE subscription information included in the first information. In the example a, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #1 and VPLMN #1 S-NSSAI #2. Therefore, the second network slice identification information of the visited network is a subset of the first network slice identification information of the visited network. In the example b, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #1, VPLMN #1 S-NSSAI #2, and VPLMN #1 S-NSSAI #3. Therefore, the second network slice identification information of the visited network is a universal set of first network slice identification information of the visited network. The universal set is also a type of subset. Therefore, the second network slice identification information of the visited network may still be referred to as a subset of the first network slice identification information of the visited network. In the example c, the first network slice identification information of the visited network includes VPLMN #1 S-NSSAI #1, VPLMN #1 S-NSSAI #2, and VPLMN #1 S-NSSAI #3, and the second network slice identification information of the visited network is VPLMN #1 S-NSSAI #2. Therefore, the second network slice identification information of the visited network is a subset of the first network slice identification information of the visited network.

For example, for the scenario in the example a, a mapping relationship between the second network slice identification information of the visited network and the first network slice identification information of the home network may be shown in Table 3-1. For the scenario in the example b, a mapping relationship between the second network slice identification information of the visited network and the first network slice identification information of the home network may be shown in Table 3-2. For the scenario in the example c, a mapping relationship between the second network slice identification information of the visited network and the first network slice identification information of the home network may be shown in Table 3-3. For brevity, the content in Table 3-1, Table 3-2, and Table 3-3 is not displayed herein again.

After determining the second information, the V-NSSF may send the second information to the V-PCF by using a response message. In an implementation, the response message may be a network slice mapping information response message (Slice mapping information Response) or a service-oriented operation Nnssf_NSSelection_Get Response. This is not limited in this application.

S707: The V-PCF sends a second request message to the H-PCF.

The second request message may be a user policy control create request message (Npcf_UEPolicyControl Create Request). The second request message is used to request to create the UE policy association (UE Policy Association). The second request message includes the second information and the UE policy assistance information corresponding to the visited location (VPLMN assistant UE policy information).

The V-PCF determines an HPLMN ID of the UE based on the subscription permanent identifier included in the first request message, and determines an identifier of the H-PCF based on the HPLMN ID. In addition, the second request message may further include an identifier of the V-PCF (V-PCF ID).

Optionally, the UE policy assistance information corresponding to the visited location (VPLMN assistant UE policy information) that is sent by the V-PCF to the H-PCF may be processed by the V-PCF. For example, in the example a, the second information includes a mapping relationship between VPLMN #1 S-NSSAI #1 and HPLMN S-NSSAI #A, and a mapping relationship between VPLMN #1 S-NSSAI #2 and HPLMN S-NSSAI #B. The second network slice identification information of the visited network is VPLMN #1 S-NSSAI #1 and VPLMN #1 S-NSSAI#2, and the first network slice identification information of the home network is HPLMN S-NSSAI #A and HPLMN S-NSSAI #B. When the identification information of the network slice to which the UE subscribes includes HPLMN S-NSSAI #A and HPLMN S-NSSAI #B, the V-PCF may filter the UE policy assistance information corresponding to the visited location (VPLMN assistant UE policy information) based on the identification information of the network slice to which the UE subscribes. As shown in Table 1, when the VPLMN ID is VPLMN #1, the VPLMN assistant UE policy information includes application #1 associated with VPLMN #1 S-NSSAI #1, application #2 associated with VPLMN #2 S-NSSAI #2, and application #3 associated with VPLMN #1 S-NSSAI #3. However, because the identification information of the network slice to which the UE subscribes does not include HPLMN S-NSSAI #C that has a mapping relationship with VPLMN #1 S-NSSAI #3, that is, the UE is not allowed to access VPLMN #1 S-NSSAI #3 in VPLMN #1, to reduce signaling overheads and reduce calculation load of the UE, before the V-PCF sends the UE policy assistance information corresponding to the visited location (VPLMN assistant UE policy information) to the H-PCF, application #3 associated with VPLMN #1 S-NSSAI #3 may be deleted from the VPLMN assistant UE policy information. As shown in Table 6-1, in the example a, the VPLMN assistant UE policy information processed by the V-PCF includes only information about application #1 associated with VPLMN #1 S-NSSAI #1 and information about application #2 associated with VPLMN #1 S-NSSAI #2.

For another example, in the example c, the second information includes a mapping relationship between VPLMN #1 S-NSSAI #2 and HPLMN S-NSSAI #B. The second network slice identification information of the visited network is VPLMN #1 S-NSSAI #2, and the first network slice identification information of the home network is HPLMN S-NSSAI #B. When the identification information of the network slice to which the UE subscribes includes HPLMN S-NSSAI #B, the V-PCF may filter the UE policy assistance information corresponding to the visited location (VPLMN assistant UE policy information) based on the identification information of the network slice to which the UE subscribes. As shown in Table 1, when the VPLMN ID is VPLMN #1, the VPLMN assistant UE policy information includes application #1 associated with VPLMN #1 S-NSSAI #1, application #2 associated with VPLMN #2 S-NSSAI #2, and application #3 associated with VPLMN #1 S-NSSAI #3. However, because the identification information of the network slice to which the UE subscribes includes neither of HPLMN S-NSSAI #A that has a mapping relationship with VPLMN #1 S-NSSAI #1 and HPLMN S-NSSAI #B that has a mapping relationship with VPLMN #1 S-NSSAI #3, that is, the UE is not allowed to access either of VPLMN #1 S-NSSAI #1 and VPLMN #1 S-NSSAI #3 in VPLMN #1, to reduce signaling overheads and reduce calculation load of the UE, before the V-PCF sends the UE policy assistance information corresponding to the visited location (VPLMN assistant UE policy information) to the H-PCF, application #1 associated with VPLMN #1 S-NSSAI #1 and application #3 associated with VPLMN #1 S-NSSAI #3 may be deleted from the VPLMN assistant UE policy information. As shown in Table 6-2, in the example a, the VPLMN assistant UE policy information processed by the V-PCF includes only information about application #2 associated with VPLMN #1 S-NSSAI #2.

In the example b, the second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. The second network slice identification information of the visited network is VPLMN #1 S-NSSAI #1, VPLMN #1 S-NSSAI #2, and VPLMN #1 S-NSSAI #3, and the first network slice identification information of the home network is HPLMN S-NSSAI #A, HPLMN S-NSSAI #B, and HPLMN S-NSSAI #C. When the information about the network slice to which the UE subscribes may be HPLMN S-NSSAI #A, HPLMN S-NSSAI #B, and HPLMN S-NSSAI #C, because the information about the network slice to which the UE subscribes is completely the same as the first network slice identification information of the home network, the V-PCF does not need to filter the UE policy assistance information corresponding to the visited location (VPLMN assistant UE policy information) based on the identification information of the network slice to which the UE subscribes. In other words, the VPLMN assistant UE policy information is still shown in Table 1, and does not change. In this case, in the example b, the VPLMN assistant UE policy information includes information about application #1 associated with VPLMN #1 S-NSSAI #1, information about application #2 associated with VPLMN #1 S-NSSAI #2, and information about application #3 associated with VPLMN #1 S-NSSAI #3.

**Table 6-1: Processed UE policy assistance information corresponding to the visited location**

| VPLMN assistant UE policy information | | |
|---|---|---|
| VPLMN ID | VPLMN assistant UE policy information | |
| | Application #1 | OSId and OSAppId |
| | | Route selection descriptors: |
| | | VPLMN #1 S-NSSAI #1 |
| | | DNN |
| VPLMN #1 | | SSC mode |
| | Application #2 | OSId and OSAppId |
| | | Route selection descriptors: |
| | | VPLMN #1 S-NSSAI #2 |
| | | DNN |
| | | SSC mode |

**Table 6-2: Processed UE policy assistance information corresponding to the visited location**

| VPLMN assistant UE policy information | | |
|---|---|---|
| VPLMN ID | VPLMN assistant UE policy information | |
| VPLMN #1 | Application #2 | OSId and OSAppId |
| | | Route selection descriptors: |
| | | VPLMN #1 S-NSSAI #2 |
| | | DNN |
| | | SSC mode |

S708: The H-PCF generates a URSP of the UE.

Specifically, for this step, refer to step S608. The H-PCF may obtain UE context policy control data (UE context policy control data) from an H-UDR. Information included in the UE context policy control data may be shown in Table 4-0. The network slice associated with the application deployed in the HPLMN is HPLMN S-NSSAI, for example, HPLMN S-NSSAI #B.

The H-PCF may generate the URSP of the UE based on Table 4-0 and the second information.

For example, in the scenario of the example a, the mapping relationship included in the second information is a mapping relationship between VPLMN #1 S-NSSAI #1 and HPLMN S-NSSAI #A and a mapping relationship between VPLMN #1 S-NSSAI #2 and HPLMN S-NSSAI #B. The H-PCF may search the UE policy assistance information corresponding to the visited location (VPLMN assistant UE policy information), and determine that the generated URSP not only needs to include the information about the application deployed in the HPLMN in Table 4-0, but also needs to additionally include the information about the application deployed in the VPLMN, for example, application #1 associated with VPLMN #1 S-NSSAI #1 and application #2 associated with VPLMN #2 S-NSSAI #2. Because the second information does not include a mapping relationship related to VPLMN #1 S-NSSAI #3, the UE cannot access, in VPLMN #1, application #3 associated with VPLMN #1 S-NSSAI #3. Therefore, the generated URSP does not include application #3 associated with VPLMN #1 S-NSSAI #3. The generated URSP includes HPLMN S-NSSAI, for example, HPLMN S-NSSAI #A and HPLMN S-NSSAI #B. Optionally, the generated URSP may further include the second network slice identification information of the visited network, for example, VPLMN #1 S-NSSAI #1 and VPLMN #1 S-NSSAI #2. In the scenario of the example a, information content included in the URSP may be shown in Table 4-1. Application #1 and application #2 are deployed in the VPLMN, application #A is deployed in the HPLMN, and network slice identification information associated with application #A is HPLMN S-NSSAI #B.

In the scenario of the example b, the second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. The H-PCF may search the UE policy assistance information corresponding to the visited location (VPLMN assistant UE policy information) shown in Table 1, and determine that the generated URSP not only needs to include the information about the application deployed in the HPLMN in Table 4-0, but also needs to additionally include the information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the second network slice identification information of the visited network, for example, VPLMN #1 S-NSSAI #1, VPLMN #1 S-NSSAI #2, and VPLMN #1 S-NSSAI #3. Information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

In the scenario of the example c, the second information includes a mapping relationship between VPLMN #1 S-NSSAI #2 and HPLMN S-NSSAI #B. The H-PCF may search the UE policy assistance information corresponding to the visited location (VPLMN assistant UE policy information), and determine that the generated URSP not only needs to include the information about the application deployed in the HPLMN in Table 4-0, but also needs to additionally include the information about the application deployed in the VPLMN, for example, application #2 associated with VPLMN #1 S-NSSAI #2. The generated URSP includes HPLMN S-NSSAI, for example, HPLMN S-NSSAI #B. Optionally, the generated URSP may further include the second network slice identification information of the visited network, for example, VPLMN #1 S-NSSAI #2. Information content included in the URSP may be shown in Table 4-3. Application #2 is deployed in the VPLMN, application #A is deployed in the HPLMN, and network slice identification information associated with application #A is HPLMN S-NSSAI #B.

S709: The V-PCF receives a second response message from the H-PCF.

The second response message may be a user policy control create response message (Npcf_UEPolicyControl Create Response), and the second response message includes the URSP generated by the H-PCF. For example, the URSP generated by the H-PCF may be any one of Table 4-1, Table 4-2, and Table 4-3.

S710: The V-AMF receives a first response message from the V-PCF.

The first response message may be a user policy control create response message (Npcf_UEPolicyControl Create Response), and the first response message includes the URSP generated by the H-PCF.

The V-AMF then sends the URSP to the UE, so that the UE accesses a service of the visited network. For example, for the foregoing example a, the URSP generated by the H-PCF is Table 4-1, and the UE may access, according to the URSP, application #1 and application #2 deployed in the visited location. For the foregoing example b, the URSP generated by the H-PCF is Table 4-2, and the UE may access, according to the URSP, application #1, application #2, and application #3 deployed in the visited location. For the foregoing example c, the URSP generated by the H-PCF is Table 4-3, and the UE may access, according to the URSP, application #2 deployed in the visited location. For access of the UE to the service of the visited network, refer to the conventional technology. Details are not described herein.

According to the technical solution of this application, a mapping relationship between visited network slice identification information of the terminal device and home network slice identification information of the terminal device can be obtained. This helps generate the URSP for the terminal device, so that the terminal device successfully accesses the service of the visited network.

Optionally, when the identification information of the network slice to which the UE subscribes changes, this embodiment may further include the following steps.

S711: The V-AMF determines that the identification information of the network slice to which the UE subscribes is updated.

Updated identification information of the network slice to which the UE subscribes is more or less than the non-updated identification information of the network slice to which the UE subscribes. This is not limited in embodiments of this application.

For example, in the example a described above, the identification information of the network slice to which the UE originally subscribes may be HPLMN S-NSSAI #A and HPLMN S-NSSAI #B, and the updated identification information of the network slice to which the UE subscribes may be only HPLMN S-NSSAI #B, may include HPLMN S-NSSAI #A, HPLMN S-NSSAI #B, and HPLMN S-NSSAI #C, or the like.

S712: The V-PCF receives, from the V-AMF, the updated identification information of the network slice to which the UE subscribes.

The V-PCF may receive a user policy control update request message (Npcf_UEPolicyControl Update Request) from the V-AMF. The update request message may include fourth information, and the fourth information includes the updated identification information of the network slice to which the UE subscribes. By way of example and not limitation, the updated identification information of the network slice to which the UE subscribes may be updated from HPLMN S-NSSAI #A and HPLMN S-NSSAI #B shown in the foregoing example 1 to HPLMN S-NSSAI #A, HPLMN S-NSSAI #B, and HPLMN S-NSSAI #C shown in the foregoing example 2, or to HPLMN S-NSSAI #B shown in the foregoing example 3.

In addition, the update request message further includes the SUPI of the UE.

S713: The V-PCF sends fifth information to the V-NSSF.

Specifically, for this process, refer to step S705. The fifth information includes the HPLMN ID, the first network slice identification information of the visited network, and the updated identification information of the network slice to which the UE subscribes. The fifth information is used to request a new mapping relationship (that is, a new mapping relationship between network slice identification information of the visited network and network slice identification information of the home network), and the new mapping relationship is determined based on the updated identification information of the network slice to which the UE subscribes.

The V-PCF may determine the identification information of the home network (HPLMN ID) of the UE by using the SUPI of the UE. For example, the HPLMN ID may be HPLMN #1.

S714: The V-PCF receives sixth information from the V-NSSF.

Specifically, the V-NSSF may determine the sixth information based on the fifth information and send the sixth information to the V-PCF. For the determining process, refer to the foregoing step S706. Details are not described herein again. The sixth information includes a mapping relationship between third network slice identification information of the visited network and second network slice identification information of the home network, and the mapping relationship is the new mapping relationship in S713.

Example 1: The first network slice identification information of the visited network includes VPLMN #1 S-NSSAI #1, VPLMN #1 S-NSSAI #2, and VPLMN #1 S-NSSAI #3. When the identification information of the network slice to which the UE subscribes is updated from HPLMN S-NSSAI #A and HPLMN S-NSSAI #B shown in the example a to HPLMN S-NSSAI #A, HPLMN S-NSSAI #B, and HPLMN S-NSSAI #C shown in the example b, the V-NSSF may determine, based on Table 5, that VPLMN #1 S-NSSAI #1 can be mapped to HPLMN S-NSSAI #A, VPLMN #1 S-NSSAI #2 can be mapped to HPLMN S-NSSAI #B, and VPLMN #1 S-NSSAI #3 can be mapped to HPLMN S-NSSAI #C. Therefore, for the UE, the UE is allowed to access VPLMN #1 S-NSSAI #1, VPLMN #1 S-NSSAI #2, and VPLMN #1 S-NSSAI #3 in VPLMN #1. The V-NSSF sends the mapping relationship between the third network slice identification information of the visited network and the second network slice identification information of the home network (that is, the sixth information) to the V-PCF. The sixth information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. In other words, the third network slice identification information of the visited network is VPLMN #1 S-NSSAI #1, VPLMN #1 S-NSSAI #2, and VPLMN #1 S-NSSAI #3, and the second network slice identification information of the home network is HPLMN S-NSSAI #A, HPLMN S-NSSAI #B, and HPLMN S-NSSAI #C. The third network slice identification information of the visited network is a subset of the first network slice identification information of the visited network, and the second network slice identification information of the home network is a subset of the updated identification information of the network slice to which the terminal device subscribes.

Example 2: The first network slice identification information of the visited network includes VPLMN #1 S-NSSAI #1, VPLMN #1 S-NSSAI #2, and VPLMN #1 S-NSSAI #3. When the updated identification information of the network slice to which the UE subscribes is updated from HPLMN S-NSSAI #A and HPLMN S-NSSAI #B shown in the example a to HPLMN S-NSSAI #B shown in the example c, the V-NSSF may determine, based on Table 2, that VPLMN #1 S-NSSAI #2 can be mapped to HPLMN S-NSSAI #B. However, although VPLMN #1 S-NSSAI #1 and VPLMN #1 S-NSSAI #3 can be mapped to HPLMN S-NSSAI #A and HPLMN S-NSSAI #C respectively, because the updated identification information of the network slice to which the UE subscribes includes neither of HPLMN S-NSSAI #A and HPLMN S-NSSAI #C, the third network slice identification information of the visited network may be VPLMN #1 S-NSSAI #2, and the second network slice identification information of the home network may be HPLMN S-NSSAI #B. The third network slice identification information of the visited network is a subset of the first network slice identification information of the visited network, and the second network slice identification information of the home network is a subset of the updated identification information of the network slice to which the terminal device subscribes.

It should be understood that the foregoing example 1 and example 2 are merely intended to show the technical solutions of this application, and should not be used as a limitation on the technical solutions of this application. It may be understood that the updated identification information of the network slice to which the UE subscribes may be one piece of network slice identification information or a combination of a plurality of pieces of network slice identification information. For example, the updated identification information of the network slice to which the UE subscribes may include only HPLMN S-NSSAI #A or only HPLMN S-NSSAI #C. For another example, the updated identification information of the network slice to which the UE subscribes may include HPLMN S-NSSAI #A and HPLMN S-NSSAI #C. For another example, the updated identification information of the network slice to which the UE subscribes may include HPLMN S-NSSAI #B and HPLMN S-NSSAI #C.

S715: The V-PCF sends a third request message to the H-PCF.

Specifically, the V-PCF may send the third request message to the H-PCF. The third request message may be a user policy control update request message (Npcf_UEPolicyControl Update Request). The update request message includes sixth information, and the sixth information includes a mapping relationship between third network slice identification information of the visited network and second network slice identification information of the home network.

S716: The H-PCF generates a new URSP based on the sixth information.

Specifically, for this step, refer to the foregoing step S708.

For example, in the example 1, the new mapping relationship included in the sixth information is a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the third network slice identification information of the visited network, for example, VPLMN #1 S-NSSAI #1, VPLMN #1 S-NSSAI #2, and VPLMN #1 S-NSSAI #3. For example, in this example, information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

For another example, in the example 2, the new mapping relationship included in the sixth information is a mapping relationship between VPLMN #1 S-NSSAI #1 and HPLMN S-NSSAI #A. The H-PCF may search the UE policy assistance information corresponding to the visited location (VPLMN assistant UE policy information) shown in Table 1, and determine that the generated URSP not only needs to include information about the application deployed in the HPLMN in Table 4-0, but also needs to additionally include information about the application deployed in the VPLMN, for example, application #1 associated with VPLMN #1 S-NSSAI #1. The generated URSP includes HPLMN S-NSSAI, for example, HPLMN S-NSSAI#A. Optionally, the generated URSP may further include the third network slice identification information of the visited network, for example, VPLMN #1 S-NSSAI #1. For example, in this example, information content included in the URSP may be shown in Table 4-3. Application #1 is deployed in the VPLMN, application #A is deployed in the HPLMN, and network slice identification information associated with application #A is HPLMN S-NSSAI #B.

It should be understood that, although not shown in the figure, after generating the new URSP, the H-PCF may send a third response message to the V-PCF. The third response message may be a user policy control update notification request message (Npcf_UEPolicyControl UpdateNotify Request), and the message includes the new URSP. The V-PCF may further send the new URSP to the V-AMF by using a user policy control update notification request message (Npcf_UEPolicyControl UpdateNotify Request), and the V-AMF sends the URSP to the UE, so that the UE accesses a service of the visited network. For example, the V-AMF sends the URSP to the UE by using a UE configuration update procedure.

According to the technical solution of this application, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

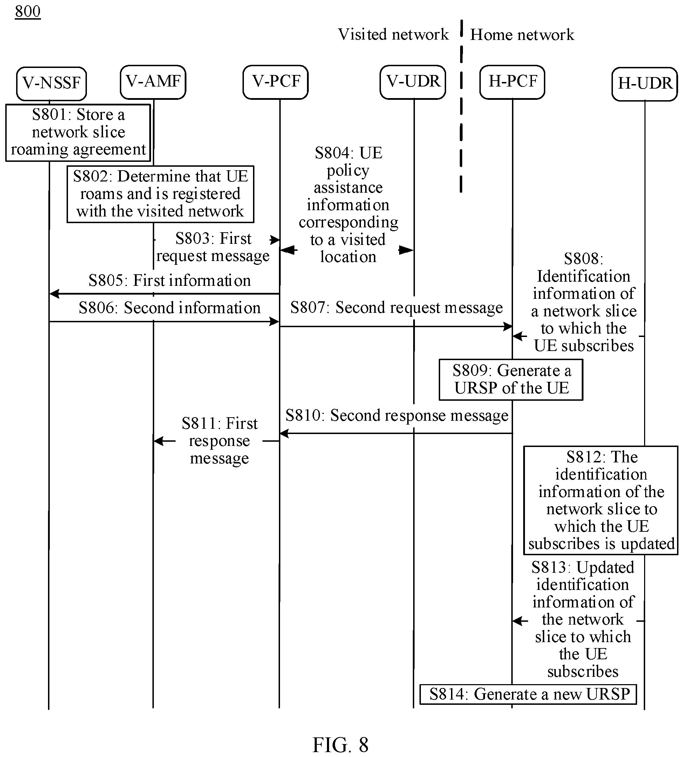

FIG. 8 is a schematic flowchart of a third specific example of a communication method according to this application. In the method shown in FIG. 8, the communication method provided in this embodiment of this application is presented by using an example in which the first network element 110 is a policy control network element belonging to a visited network (V-PCF), the second network element 120 is a network slice selection network element belonging to the visited network (V-NSSF), and the third network element 130 is a policy control network element belonging to a home network (H-PCF). Alternatively, the second network element 120 may be a mobility management network element belonging to the visited network (V-AMF). This is not limited in this application. In FIG. 8, only an example in which the second network element 120 is the network slice selection network element belonging to the visited network (H-NSSF) is used for description.

S801: The V-NSSF stores a network slice roaming agreement.

S801 is the same as S701, and details are not described herein again.

S802: A V-AMF determines that UE roams and is registered with the visited network.

S802 is the same as S702, and details are not described herein again.

S803: The V-AMF sends a first request message to the V-PCF.

The first request message may be a user policy control create request message (Npcf_UEPolicyControl Create Request), and is used to request the V-PCF to create a UE policy association (UE Policy Association). The first request message includes an SUPI of the UE. Different from that in S703, the first request message does not include identification information of a network slice to which the UE subscribes.

S804: The V-PCF obtains UE policy assistance information corresponding to a visited location.

S804 is the same as S704, and details are not described herein again.

S805: The V-PCF sends first information to the V-NSSF.

Specifically, in a possible implementation, the V-PCF sends a request message to the V-NSSF. The request message may be a network slice mapping information request message (Slice mapping information Request) or a service-oriented operation Nnssf_NSSelection_Get Request. This is not limited in this application. The request message includes the first information. The first information includes identification information of the home network (HPLMN ID) and first network slice identification information of the visited network.

The V-PCF may determine the identification information of the home network (HPLMN ID) of the UE by using the SUPI of the UE. For example, the HPLMN ID may be HPLMN #1. The V-PCF may determine, based on step S804, the first network slice identification information of the visited network from the UE policy assistance information corresponding to the visited location (VPLMN assistant UE policy information). For example, when visited network identification information VPLMN ID of the V-PCF is VPLMN #1, the first network slice identification information of the visited network may be VPLMN #1 S-NSSAI #1, VPLMN #1 S-NSSAI #2, and VPLMN #1 S-NSSAI #3.

S806: The V-PCF receives second information from the V-NSSF.

The V-NSSF may determine the second information based on the first information, where the second information includes a mapping relationship between the first network slice identification information of the visited network and first network slice identification information of the home network.

For example, the first network slice identification information of the visited network includes VPLMN #1 S-NSSAI #1, VPLMN #1 S-NSSAI #2, and VPLMN #1 S-NSSAI #3 (as shown in Table 7), and the first network slice identification information of a home location includes HPLMN S-NSSAI #A, HPLMN S-NSSAI #B, and HPLMN S-NSSAI #C. In this case, the V-NSSF may determine, based on Table 5, that VPLMN #1 S-NSSAI #1 can be mapped to HPLMN S-NSSAI #A, VPLMN #1 S-NSSAI #2 can be mapped to HPLMN S-NSSAI #B, and VPLMN #1 S-NSSAI #3 can be mapped to HPLMN S-NSSAI #C. Therefore, the V-NSSF sends the mapping relationship between the first network slice identification information of the visited network and the first network slice identification information of the home network (that is, the second information) to the V-PCF. As shown in Table 7, the second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C.

**Table 7: Mapping relationship between the first network slice identification information of the visited network and the first network slice identification information of the home network**

| VPLMN S-NSSAI | Mapping relationship between the first network slice identification information of the visited network and the first network slice identification information of the home network |
|---|---|
| VPLMN #1 S-NSSAI #1 | VPLMN #1 S-NSSAI #1 <-> HPLMN S-NSSAI #A |
| VPLMN #1 S-NSSAI #2 | VPLMN #1 S-NSSAI #2 <-> HPLMN S-NSSAI #B |
| VPLMN #1 S-NSSAI #3 | VPLMN #1 S-NSSAI #3 <-> HPLMN S-NSSAI #C |

After determining the second information, the V-NSSF may send the second information to the V-PCF by using a response message. In an implementation, the response message may be a network slice mapping information response message (Slice mapping information Response) or a service-oriented operation Nnssf_NSSelection_Get Response. This is not limited in this application.

S807: The V-PCF sends a second request message to the H-PCF.

The second request message may be a user policy control create request message (Npcf_UEPolicyControl Create Request). The second request message is used to request to create the UE policy association (UE Policy Association). The second request message includes the second information and the UE policy assistance information corresponding to the visited location (VPLMN assistant UE policy information).

The V-PCF determines an HPLMN ID of the UE based on the subscription permanent identifier included in the first request message, and determines an identifier of the H-PCF based on the HPLMN ID. In addition, the second request message may further include an identifier of the V-PCF (V-PCF ID).

S808: The H-PCF obtains the identification information of the network slice to which the UE subscribes.

Specifically, the H-PCF may obtain, from an H-UDR, the identification information of the network slice to which the UE subscribes. For example, the H-PCF may send a query request message (Nudr_Query Request) to the H-UDR, where the query request message is used to query UE subscription information from the H-UDR. Correspondingly, the H-UDR may send a query response message (Nudr _Query Response) to the H-PCF. The query response message includes the UE subscription information, the UE subscription information includes the information about the network slice to which the UE subscribes, and the information about the network slice to which the UE subscribes includes HPLMN S-NSSAI. For example, the information about the network slice to which the UE subscribes may be HPLMN S-NSSAI #A, HPLMN S-NSSAI #B, and/or HPLMN S-NSSAI #C.

S809: The H-PCF generates a URSP of the UE.

The H-PCF obtains UE context policy control data (UE context policy control data) from the H-UDR. The UE context policy control data includes a DNN, an SSC mode, and network slice information that are associated with an application deployed in the HPLMN, as shown in Table 4-0. The network slice associated with the application deployed in the HPLMN is HPLMN S-NSSAI, for example, HPLMN S-NSSAI #B.

Specifically, the H-PCF may first determine, based on the second information and the identification information of the network slice to which the UE subscribes, second network slice identification information of the visited network that can be used to generate the URSP, and then generate the URSP of the UE based on the second network slice identification information of the visited network and Table 4-0.

Example M: The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C, and the information about the network slice to which the UE subscribes is HPLMN S-NSSAI #A and HPLMN S-NSSAI #B. In this case, the H-PCF may determine that the second network slice identification information of the visited network is VPLMN #1 S-NSSAI #1 and VPLMN #1 S-NSSAI #2. Therefore, the second network slice identification information of the visited network is a subset of the first network slice identification information of the visited network. After determining the second network slice identification information of the visited network, the H-PCF may search the VPLMN assistant UE policy information, and determine that the generated URSP not only needs to include the information about the application deployed in the HPLMN in Table 4-0, but also needs to additionally include the information about the application deployed in the VPLMN, for example, application #1 associated with VPLMN #1 S-NSSAI #1 and application #2 associated with VPLMN #2 S-NSSAI #2. Because the information about the network slice to which the UE subscribes does not include HPLMN #1 S-NSSAI #C, the UE cannot access, in VPLMN #1, application #3 associated with VPLMN #1 S-NSSAI #3 (there is a mapping relationship between VPLMN #1 S-NSSAI #3 and HPLMN #1 S-NSSAI #C). Therefore, the generated URSP does not include application #3 associated with VPLMN #1 S-NSSAI #3. The generated URSP includes HPLMN S-NSSAI, for example, HPLMN S-NSSAI #A and HPLMN S-NSSAI #B. Optionally, the generated URSP may further include the second network slice identification information of the visited network, for example, VPLMN #1 S-NSSAI #1 and VPLMN #1 S-NSSAI #2. For example, in this example, information content included in the URSP may be shown in Table 4-1. Application #1 and application #2 are deployed in the VPLMN, application #A is deployed in the HPLMN, and network slice identification information associated with application #A is HPLMN S-NSSAI #B.

Example N: The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C, and the information about the network slice to which the UE subscribes is HPLMN S-NSSAI #A, HPLMN S-NSSAI #B, and HPLMN S-NSSAI #C. In this case, the H-PCF may determine that the second network slice identification information of the visited network is VPLMN #1 S-NSSAI #1, VPLMN #1 S-NSSAI #2, and VPLMN #1 S-NSSAI #3. Therefore, the second network slice identification information of the visited network is a subset of the first network slice identification information of the visited network. After determining the second network slice identification information of the visited network, the H-PCF may search the UE policy assistance information corresponding to the visited location (VPLMN assistant UE policy information), and determine that the generated URSP not only needs to include information about the application deployed in the HPLMN in Table 4-0, but also needs to additionally include information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the second network slice identification information of the visited network, for example, VPLMN #1 S-NSSAI #1, VPLMN #1 S-NSSAI #2, and VPLMN #1 S-NSSAI #3. For example, in this example, information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

Example Q: The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C, and the information about the network slice to which the UE subscribes is HPLMN S-NSSAI #B. In this case, the H-PCF may determine that the second network slice identification information of the visited network is VPLMN #1 S-NSSAI #2. After determining the second network slice identification information of the visited network, the H-PCF may search the UE policy assistance information corresponding to the visited location (VPLMN assistant UE policy information), and determine that the generated URSP not only needs to include information about the application deployed in the HPLMN in Table 4-0, but also needs to additionally include information about the application deployed in the VPLMN, for example, application #2 associated with VPLMN #1 S-NSSAI #2. The generated URSP includes HPLMN S-NSSAI, for example, HPLMN S-NSSAI #B. Optionally, the generated URSP may further include the second network slice identification information of the visited network, for example, VPLMN #1 S-NSSAI #2. For example, in this example, information content included in the URSP may be shown in Table 4-3. Application #2 is deployed in the VPLMN, application #A is deployed in the HPLMN, and network slice identification information associated with application #A is HPLMN S-NSSAI #B.

It can be learned from the foregoing examples that the URSP generated by the H-PCF varies with the mapping relationship included in the second information.

S810: The V-PCF receives a second response message from the H-PCF.

The second response message may be a user policy control create response message (Npcf_UEPolicyControl Create Response), and the second response message includes the URSP generated by the H-PCF. For example, the URSP generated by the H-PCF may be any one of Table 4-1, Table 4-2, and Table 4-3.

S811: The V-AMF receives a first response message from the V-PCF.

The first response message may be a user policy control create response message (Npcf_UEPolicyControl Create Response), and the first response message includes the URSP generated by the H-PCF.

The V-AMF then sends the URSP to the UE, so that the UE accesses a service of the visited network. For example, for the foregoing example M, the URSP generated by the H-PCF is Table 4-1, and the UE may access, according to the URSP, application #1 and application #2 deployed in the visited location. For the foregoing example N, the URSP generated by the H-PCF is Table 4-2, and the UE may access, according to the URSP, application #1, application #2, and application #3 deployed in the visited location. For the foregoing example Q, the URSP generated by the H-PCF is Table 4-3, and the UE may access, according to the URSP, application #2 deployed in the visited location. For access of the UE to the service of the visited network, refer to the conventional technology. Details are not described herein.

According to the technical solution of this application, a mapping relationship between visited network slice identification information of the terminal device and home network slice identification information of the terminal device can be obtained. This helps generate the URSP for the terminal device, so that the terminal device successfully accesses the service of the visited network.

Optionally, when the identification information of the network slice to which the UE subscribes changes, this embodiment may further include the following steps.

S812: The H-UDR determines that the identification information of the network slice to which the UE subscribes is updated.

Updated identification information of the network slice to which the UE subscribes is more or less than the non-updated identification information of the network slice to which the UE subscribes. This is not limited in embodiments of this application.

For example, in the example M described above, the identification information of the network slice to which the UE originally subscribes may be HPLMN S-NSSAI #A and HPLMN S-NSSAI #B, and the updated identification information of the network slice to which the UE subscribes may be only HPLMN S-NSSAI #B, may include HPLMN S-NSSAI #A, HPLMN S-NSSAI #B, and HPLMN S-NSSAI #C, or the like.

S813: The H-PCF receives, from the H-UDR, the updated identification information of the network slice to which the UE subscribes.

The H-PCF may receive a notification message (Nudr_DM_Notify) from the H-UDR. The notification message may include third information, and the third information includes the updated identification information of the network slice to which the UE subscribes. By way of example and not limitation, the updated identification information of the network slice to which the UE subscribes may be updated from HPLMN S-NSSAI #A and HPLMN S-NSSAI #B shown in the foregoing example M to HPLMN S-NSSAI #A, HPLMN S-NSSAI #B, and HPLMN S-NSSAI #C shown in the foregoing example N, or to HPLMN S-NSSAI #B shown in the foregoing example Q.

S814: The H-PCF generates a new URSP.

For this process, refer to the foregoing step S809.

Example X: The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. When the updated identification information of the network slice to which the UE subscribes is updated from HPLMN S-NSSAI #A and HPLMN S-NSSAI #B shown in the foregoing example M to HPLMN S-NSSAI #A, HPLMN S-NSSAI #B, and HPLMN S-NSSAI #C shown in the foregoing example N, the H-PCF may search the UE policy assistance information corresponding to the visited location (VPLMN assistant UE policy information), and determine that the generated URSP not only needs to include the information about the application deployed in the HPLMN in Table 4-0, but also needs to additionally include the information about the application deployed in the VPLMN, for example, application #1 associated with VPLMN #1 S-NSSAI #1, application #2 associated with VPLMN #2 S-NSSAI #2, and application #3 associated with VPLMN #1 S-NSSAI #3. The generated URSP includes HPLMN S-NSSAI, for example, HPLMN S-NSSAI #A, HPLMN S-NSSAI #B, and HPLMN S-NSSAI #C. Optionally, the generated URSP may further include the second network slice identification information of the visited network, for example, VPLMN #1 S-NSSAI #1, VPLMN #1 S-NSSAI #2, and VPLMN #1 S-NSSAI #3. For example, in this example, information content included in the URSP may be shown in Table 4-2. Application #1, application #2, and application #3 are deployed in the VPLMN, application #A is deployed in the HPLMN, and network slice identification information associated with application #A is HPLMN S-NSSAI #B.

Example Y: The second information includes a mapping relationship between VPLMN #1 S-NSSAI #1 and HPLMN S-NSSAI #A, a mapping relationship between VPLMN #1 S-NSSAI #2 and HPLMN S-NSSAI #B, and a mapping relationship between VPLMN #1 S-NSSAI #3 and HPLMN S-NSSAI #C. When the updated identification information of the network slice to which the UE subscribes is updated from HPLMN S-NSSAI #A and HPLMN S-NSSAI #B shown in the foregoing example M to HPLMN S-NSSAI #B shown in the foregoing example Q, the H-PCF may search the UE policy assistance information corresponding to the visited location (VPLMN assistant UE policy information), and determine that the generated URSP not only needs to include the information about the application deployed in the HPLMN in Table 4-0, but also needs to additionally include the information about the application deployed in the VPLMN, for example, application #2 associated with VPLMN #1 S-NSSAI #2. The generated URSP includes HPLMN S-NSSAI, for example, HPLMN S-NSSAI #B. Optionally, the generated URSP may further include the second network slice identification information of the visited network, for example, VPLMN #1 S-NSSAI #2. For example, in this example, information content included in the URSP may be shown in Table 4-3. Application #2 is deployed in the VPLMN, application #A is deployed in the HPLMN, and network slice identification information associated with application #A is HPLMN S-NSSAI #B.

It should be understood that the foregoing example X and example Y are merely intended to show the technical solutions of this application, and should not be used as a limitation on the technical solutions of this application. It may be understood that the updated identification information of the network slice to which the UE subscribes may be one piece of network slice identification information or a combination of a plurality of pieces of network slice identification information. For example, the updated identification information of the network slice to which the UE subscribes may include only HPLMN S-NSSAI #A or only HPLMN S-NSSAI #B. For another example, the updated identification information of the network slice to which the UE subscribes may include HPLMN S-NSSAI #A and HPLMN S-NSSAI #B. For another example, the updated identification information of the network slice to which the UE subscribes may include HPLMN S-NSSAI #B and HPLMN S-NSSAI #C.

It should be understood that, although not shown in the figure, after generating the new URSP, the H-PCF may send the new URSP to the V-PCF by using a user policy control update notification request message (Npcf_UEPolicyControl UpdateNotify Request), the V-PCF may further send the new URSP to the V-AMF by using a user policy control update notification request message (Npcf_UEPolicyControl UpdateNotify Request), and the V-AMF sends the URSP to the UE, so that the UE accesses a service of the visited network. For example, the V-AMF sends the URSP to the UE by using a UE configuration update procedure.

According to the technical solution of this application, after the identification information of the network slice to which the terminal device subscribes changes or is updated, a mapping relationship between visited network slice identification information of the terminal device and home network slice identification information of the terminal device can be re-obtained based on the updated identification information of the network slice to which the terminal device subscribes. This helps generate the URSP for the terminal device, so that the terminal device successfully accesses the service of the visited network.

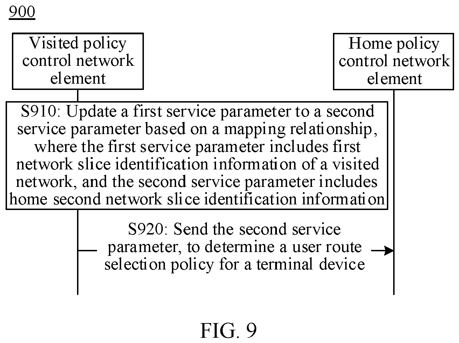

An embodiment of this application further provides another implementation of the communication system in FIG. 1. In this implementation, the communication system includes a first network element 110 and a second network element 120. Optionally, the system 100 may further include a third network element 130 and a fourth network element 140. The system 100 may be configured to perform any communication method in the embodiments shown in FIG. 9 to FIG. 13 of this application.

The first network element 110 is configured to: update a first service parameter to a second service parameter based on a mapping relationship between first network slice identification information of a visited network and second network slice identification information of a home network, and send the second service parameter to the second network element 120, where the first service parameter includes the first network slice identification information of the visited network, and the second service parameter includes the second network slice identification information of the home network.

The second network element 120 is configured to determine a user route selection policy for a terminal device based on the second service parameter, where the user route selection policy is to be used by the terminal device to access a visited service.

Optionally, the third network element 130 is configured to send the mapping relationship between the first network slice identification information of the visited network and the second network slice identification information of the home network to the first network element 110.

Optionally, the fourth network element 140 is configured to send the first service parameter to the first network element 110.

For a specific interaction process between the network elements, refer to the following descriptions in FIG. 9 to FIG. 13. Details are not described herein.

For example, according to the communication system provided in this application, a mapping relationship between visited network slice identification information of the terminal device and home network slice identification information of the terminal device can be obtained. This helps generate the user route selection policy for the terminal device, so that the terminal device successfully accesses the service of the visited network.

In this implementation, the system 100 shown in FIG. 1 may be applied to a 5th generation (5th generation, 5G) network architecture shown in FIG. 2 or FIG. 3, and certainly may also be applied to a future network architecture, for example, a 6th generation (6th generation, 6G) network architecture. This is not specifically limited in embodiments of this application. For example, when the communication system shown in FIG. 1 is applied to the 5G network shown in FIG. 2 or FIG. 3, the first network element 110 may be a policy control network element in the visited network (V-PCF), the second network element 120 may be a policy control network element in the home network (H-PCF), the third network element 130 may be a mobility management network element in the visited network (V-AMF), and the fourth network element 140 may be a mobility management network element in the visited network (V-UDR).

FIG. 9 is a schematic flowchart of another example of a communication method according to this application.

S910: A visited policy control network element updates a first service parameter to a second service parameter based on a mapping relationship, where the first service parameter includes first network slice identification information of a visited network, and the second service parameter includes second network slice identification information of a home network.

The mapping relationship includes a mapping relationship between the first network slice identification information of the visited network and the second network slice identification information of the home network.

In a possible implementation, the visited policy control network element may receive the mapping relationship from a visited mobility management network element.

Optionally, before receiving the mapping relationship, the visited policy control network element sends a message for obtaining the mapping relationship to the visited mobility management network element.

Optionally, the mapping relationship includes a mapping relationship that is between configured network slice identification information and home network slice identification information and that is determined by a visited location for a terminal device, the configured network slice identification information includes the first network slice identification information, and the home network slice identification information includes the second network slice identification information.

In another possible implementation, the visited policy control network element obtains the mapping relationship from a local configuration.

Optionally, the visited policy control network element receives, from a visited mobility management network element, identification information of a network slice to which a terminal device subscribes. That the visited policy control network element updates the first service parameter to the second service parameter based on the mapping relationship includes: The visited policy control network element updates the first service parameter to the second service parameter based on the mapping relationship and the identification information of the network slice to which the terminal device subscribes.

Optionally, before receiving the identification information of the network slice to which the terminal device subscribes, the visited policy control network element sends, to the visited mobility management network element, a message for obtaining the identification information of the network slice to which the terminal device subscribes.

Optionally, the visited policy control network element obtains the first service parameter from a visited unified data repository network element.

S920: The visited policy control network element sends the second service parameter to a home policy control network element, to determine a user route selection policy for the terminal device.

Optionally, the visited policy control network element receives the user route selection policy from the home policy control network element; and the visited policy control network element sends the user route selection policy to the visited mobility management network element, where the user route selection policy is to be used by the terminal device to access a service of the visited network.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses the service of the visited network.

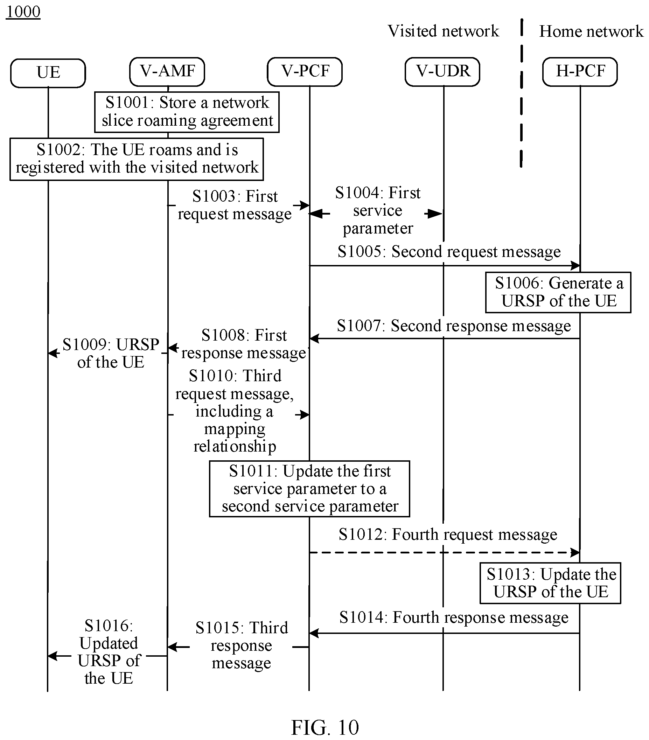

FIG. 10 is a schematic flowchart of a fourth specific example of a communication method according to this application. For ease of description, in embodiments shown in FIG. 10 to FIG. 13, a visited policy control network element is referred to as a V-PCF for short, a visited mobility management network element is referred to as a V-AMF for short, a visited unified data repository network element is referred to as a V-UDR for short, a home policy control network element is referred to as an H-PCF for short, a terminal device is referred to as UE for short, network slice identification information may be equivalently interchanged with a network slice in terms of expression, a URSP is used as an example of a user route selection policy, and the user route selection policy includes but is not limited to the URSP. Both a visited location and a home location are relative to the UE. The visited location is a visited network of the UE, and the home location is a home network of the UE.

S1001: A V-AMF stores a network slice roaming agreement.

In this embodiment, the V-AMF may store the network slice roaming agreement, including a slice mapping relationship between an HPLMN and a VPLMN. In an implementation, the network slice roaming agreement may be preconfigured in the V-AMF. For example, a mapping relationship about network slice identification information between the HPLMN and the VPLMN may be shown in Table 8.

**Table 8: Mapping relationship about network slice identification information between the HPLMN and the VPLMN**

| VPLMN ID | Identification information of a network slice deployed in the visited PLMN | Mapping relationship about network slice identification information between the VPLMN and the HPLMN |
|---|---|---|
| VPLMN #1 | VPLMN #1 S-NSSAI #1 | VPLMN #1 S-NSSAI #1 <-> HPLMN S-NSSAI #A |
| | VPLMN #1 S-NSSAI #2 | |
| | VPLMN #1 S-NSSAI #3 | VPLMN #1 S-NSSAI #2 <-> HPLMN S-NSSAI #B |
| | | VPLMN #1 S-NSSAI #3 <-> HPLMN S-NSSAI #C |
| VPLMN #2 | VPLMN #2 S-NSSAI-1 | VPLMN #1 S-NSSAI #1 <-> HPLMN S-NSSAI #C |
| | VPLMN #2 S-NSSAI-2 | |
| | VPLMN #2 S-NSSAI-3 | VPLMN #1 S-NSSAI #2 <-> HPLMN S-NSSAI #C |
| | | VPLMN #1 S-NSSAI #3 <-> HPLMN S-NSSAI #C |

It can be learned from Table 8 that there are different mapping relationships between different visited network slice identification information (VPLMN S-NSSAI) and HPLMN S-NSSAI. It should be understood that Table 8 is merely a possible example, and should not be used as a limitation on this application.

S1002: The UE roams and is registered with a visited network.

For registration of the UE with the visited network, refer to the conventional technology. Details are not described herein. For example, the visited network is VPLMN #1.

S1003: The V-AMF sends a first request message to a V-PCF.

Specifically, the first request message may be a user policy control create request message (Npcf_UEPolicyControl Create Request), and is used to request the V-PCF to create a UE policy association (UE Policy Association). Both the V-AMF and the V-PCF are located in the visited network VPLMN #1. The first request message includes a subscription permanent identifier, for example, a subscription permanent identifier (subscription permanent identifier, SUPI), of the UE.

S1004: The V-PCF obtains a first service parameter from a V-UDR.

Optionally, the V-PCF may determine, based on visited network configuration information or identification information of the home network of the UE, whether to perform step 1004.

Optionally, the V-PCF may alternatively obtain the first service parameter from a local configuration. This is not limited in this application.

The first service parameter may be carried in or is a service parameter specific to a visited location (VPLMN specific service parameter). The VPLMN specific service parameter may include a DNN, an SSC mode, and network slice information that are associated with an application deployed in the VPLMN. The network slice identification information included in the VPLMN specific service parameter may be represented by VPLMN S-NSSAI.

For example, information content included in the VPLMN specific service parameter may be shown in Table 9. Application #1, application #2, and application #3 are deployed in VPLMN #1, and network slice identification information respectively associated with application #1, application #2, and application #3 is VPLMN #1 S-NSSAI #1, VPLMN #2 S-NSSAI #2, and VPLMN #3 S-NSSAI #3.

**Table 9: Service parameter specific to the visited location (VPLMN specific service parameter)**

| VPLMN ID | VPLMN assistant UE policy information | |
|---|---|---|
| | Application #1 | OSId and OSAppId |
| | | Route selection descriptors: |
| | | VPLMN #1 S-NSSAI #1 |
| | | DNN |
| | | SSC mode |
| | Application #2 | OSId and OSAppId |
| | | Route selection descriptors: |
| VPLMN #1 | | VPLMN #1 S-NSSAI #2 |
| | | DNN |
| | | SSC mode |
| | Application #3 | OSId and OSAppId |
| | | Route selection descriptors: |
| | | VPLMN #1 S-NSSAI #3 |
| | | DNN |
| | | SSC mode |

S1005: The V-PCF sends a second request message to an H-PCF.

The second request message may be a user policy control create request message (Npcf_UEPolicyControl Create Request), and the second request message is used to request to create the UE policy association (UE Policy Association). The V-PCF determines an HPLMN ID of the UE based on the subscription permanent identifier included in the first request message, and determines an identifier of the H-PCF based on the HPLMN ID. In addition, the second request message may further include an identifier of the V-PCF (V-PCF ID).

It should be noted that the second request message does not include the VPLMN specific service parameter.

S1006: The H-PCF generates a URSP of the UE.

Specifically, the H-PCF obtains UE context policy control data (UE context policy control data) from an H-UDR, where the UE context policy control data includes a DNN, an SSC mode, and network slice information that are associated with an application deployed in the HPLMN. As shown in Table 10, a network slice associated with the application deployed in the HPLMN is HPLMN S-NSSAI, for example, HPLMN S-NSSAI #B.

**Table 10: UE context policy control data (UE context policy control data)**

| | | |
|---|---|---|
| HPLMN | Application #A | OSId and OSAppId |
| | | Route selection descriptors: |
| | | HPLMN S-NSSAI #B |
| | | DNN |
| | | SSC mode |

It can be learned from Table 10 that, in this case, the URSP is generated by the H-PCF based on only home network slice identification information HPLMN S-NSSAI, for example, HPLMN S-NSSAI #B. For ease of differentiation, the URSP may be referred to as a first URSP.

S1007: The H-PCF sends a second response message to the V-PCF.

The second response message may be a user policy control create response message (Npcf_UEPolicyControl Create Response message), and the second response message includes the first URSP generated by the H-PCF.

S1008: The V-PCF sends a first response message to the V-AMF.

Specifically, the first response message may be a user policy control create response message (Npcf_UEPolicyControl Create Response message), and the first response message includes the first URSP generated by the H-PCF.

The first response message further includes first information, used to obtain the mapping relationship. The mapping relationship includes a mapping relationship between network slice identification information of the visited network and network slice identification information of the home network. The first information may be policy control create request trigger information (PolicyControl Request Trigger) sent to the V-AMF, to indicate the V-AMF to send a user policy control update request message (Npcf_UEPolicyControl Update Request) to the V-PCF when a preset condition is met. The request message needs to include the mapping relationship. A case in which the preset condition is met is not limited in this application. For example, the case may be a case in which the mapping relationship exists, or a case in which the mapping relationship is updated.

S1009: Optionally, the V-AMF sends the URSP of the UE to the UE.

This step is optional. The V-AMF sends the first URSP to the UE, so that the UE accesses a service of the visited network. However, the first URSP is generated based on only the home network slice identification information HPLMN S-NSSAI, and visited network slice identification information VPLMN S-NSSAI is not considered. Therefore, the first URSP may fail to enable the UE to access the service of the visited network.

S 10 10: The V-AMF sends a third request message to the V-PCF, where the third request message includes a mapping relationship.

It should be understood that this step further includes: The V-AMF obtains identification information of a network slice to which the UE subscribes, and determines the mapping relationship based on the identification information of the network slice to which the UE subscribes and the roaming agreement, where the mapping relationship includes a mapping relationship between network slice identification information of the visited network and network slice identification information of the home network.

For example, the V-AMF obtains the network slice to which the UE subscribes, and determines configured network slice identification information (Configured NSSAI) and/or mapping of configured NSSAI based on the network slice to which the UE subscribes and the roaming agreement. The network slice identification information included in the configured NSSAI is the network slice identification information of the visited network. The mapping of configured NSSAI means that the configured NSSAI includes the network slice identification information of the visited network and the network slice identification information of the home network. A network slice of the home network included in the mapping of configured NSSAI is a network slice to which the UE subscribes. The V-AMF may determine the mapping relationship based on the configured NSSAI and/or the mapping of configured NSSAI. For example, the mapping relationship includes the configured NSSAI and the mapping of configured NSSAI, or the mapping relationship includes the mapping of configured NSSAI.

Optionally, in another implementation, if the V-AMF cannot determine the mapping relationship based on the identification information of the network slice to which the UE subscribes and the roaming agreement, the V-AMF may obtain the mapping relationship by requesting a V-NSSF. For example, the V-AMF sends, to the V-NSSF, the identification information of the network slice to which the UE subscribes, and the V-NSSF determines the mapping relationship, and returns the mapping relationship to the V-AMF.

Optionally, after obtaining the configured NSSAI and/or the mapping of configured NSSAI, the V-AMF may store the configured NSSAI and/or the mapping of configured NSSAI in a UE context based on a home HPLMN ID of the UE.

Specifically, the V-AMF determines that the preset condition is met, and sends the mapping relationship to the V-PCF by sending the third request message. The third request message may be a user policy control create update message (Npcf_UEPolicyControl UpdateRequest), and is used to request the V-PCF to modify the UE policy association (UE Policy Association Modification).

For example, the mapping relationship may be shown in Table 11.

**Table 11: Mapping relationship**

| Mapping relationship between the first network slice identification information of the visited network and the second network slice identification information of the home network |
|---|
| VPLMN #1 S-NSSAI #1 <-> HPLMN S-NSSAI #A |
| VPLMN #1 S-NSSAI #2 <-> HPLMN S-NSSAI #B |

It can be learned that the mapping relationship includes a mapping relationship that is between configured network slice identification information (Configured NSSAI) and home network slice identification information and that is determined by the visited location for the UE. The configured NSSAI includes the first network slice identification information (for example, VPLMN #1 S-NSSAI #1 and VPLMN #1 S-NSSAI #2), and the home network slice identification information includes the second network slice identification information (for example, HPLMN S-NSSAI #A and HPLMN S-NSSAI #B). In addition, HPLMN S-NSSAI #A and HPLMN S-NSSAI #B belong to the identification information of the network slice to which the UE subscribes. It can be learned that the home network slice included in the mapping relationship is the network slice to which the UE subscribes. This may also be understood as that the home network slice that has a mapping relationship with the network slice identification information of the visited network included in the mapping relationship belongs to the identification information of the network slice to which the UE subscribes.

S1011: The V-PCF updates the first service parameter to a second service parameter.

The first service parameter includes the network slice identification information of the visited network VPLMN S-NSSAI, and the second service parameter includes the home network slice identification information HPLMN S-NSSAI.

For example, when the network slice identification information included in the first service parameter (VPLMN specific service parameter) is VPLMN #1 S-NSSAI #1, VPLMN #1 S-NSSAI #2, and VPLMN #1 S-NSSAI #3 (as shown in Table 9), and the mapping relationship includes that HPLMN S-NSSAI #A can be mapped to VPLMN #1 S-NSSAI #1, and HPLMN S-NSSAI #B can be mapped to VPLMN #1 S-NSSAI #2 (as shown in Table 11), the V-PCF may determine, based on the mapping relationship, to map VPLMN #1 S-NSSAI #1 and VPLMN #1 S-NSSAI #2 included in PLMN specific service parameters to HPLMN S-NSSAI #A and HPLMN S-NSSAI #B respectively. The network slice identification information included in the second service parameter is HPLMN S-NSSAI #A and HPLMN S-NSSAI #B. Because the mapping relationship does not indicate which HPLMN S-NSSAI has a mapping relationship with VPLMN #1 S-NSSAI #3, the second service parameter does not need to include VPLMN #1 S-NSSAI #3. It may be understood that the network slice identification information included in the second service parameter is HPLMN S-NSSAI and belongs to the identification information of the network slice to which the UE subscribes.

S1012: The V-PCF sends a fourth request message to the H-PCF.

The fourth request message may be a user policy control create update request message (Npcf_UEPolicyControl Update Request), and the fourth request message is used to request to update the UE policy association (UE Policy Association Modification).

It should be noted that the fourth request message includes the second service parameter.

S1013: The H-PCF updates the URSP of the UE.

Specifically, the H-PCF updates the first URSP based on the second service parameter, to obtain an updated URSP of the UE. For ease of differentiation, the updated URSP may be referred to as a second URSP.

For example, content included in the second URSP may be shown in Table 12.

**Table 12: Second user route selection policy URSP**

| URSP rule | | |
|---|---|---|
| Rule #1 | Traffic descriptor #1 | |
| | Application #1 | OSId and OSAppId |
| | List of route selection descriptors | HPLMN S-NSSAI #A (Optional) VPLMN #1 S-NSSAI #1 |
| | | DNN |
| | | SSC mode |
| Rule #2 | Traffic descriptor #2 | |
| | Application #2 | OSId and OSAppId |
| | List of route selection descriptors | HPLMN S-NSSAI #B (Optional) VPLMN #1 S-NSSAI #2 |
| | | DNN |
| | | SSC mode |
| Rule #3 | Traffic descriptor #3 | |
| | Application #A | OSId and OSAppId |
| | List of route selection descriptors | HPLMN S-NSSAI #B |
| | | DNN |
| | | SSC mode |

Application #1 and application #2 are deployed in the VPLMN, and application #A is deployed in the HPLMN.

It can be learned from Table 12 that the second URSP includes the HPLMN S-NSSAI that has a mapping relationship with the VPLMN S-NSSAI. Optionally, the second URSP may further include the VPLMN S-NSSAI. In this way, the UE can directly determine the HPLMN S-NSSAI and the VPLMN S-NSSAI according to the URSP.

S1014: The H-PCF sends a fourth response message to the V-PCF.

Specifically, the fourth response message may be a user policy control create response message (Npcf_UEPolicyControl Create Response message), and the fourth response message includes the URSP updated by the H-PCF, that is, the second URSP.

S1015: The V-PCF sends a third response message to the V-AMF.

Specifically, the third response message may be a user policy control create update response message (Npcf_UEPolicyControl Update Response), and the third response message includes the URSP updated by the H-PCF, that is, the second URSP.

S1016: The V-AMF sends the updated URSP of the UE to the UE.

The updated URSP of the UE may be the second URSP shown in Table 12, and is to be used by the UE to access a visited service.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses the service of the visited network.

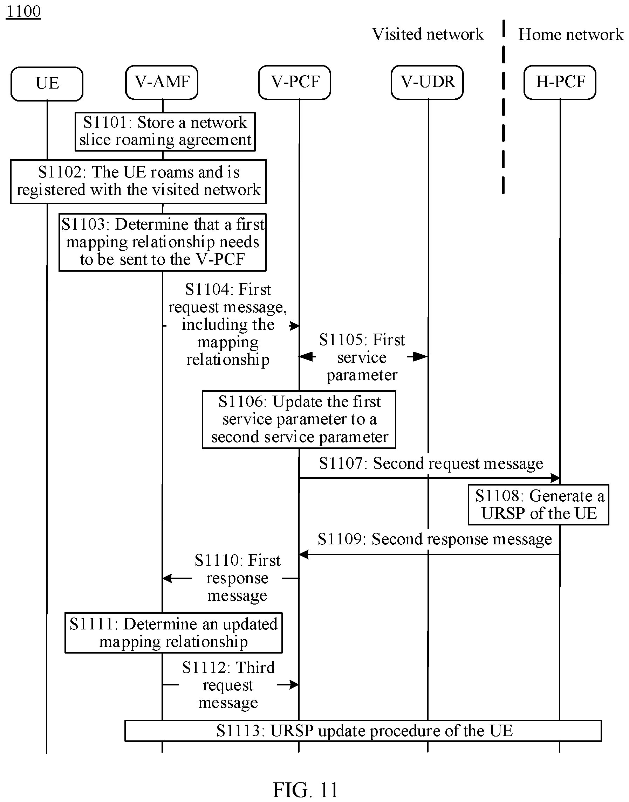

FIG. 11 is a schematic flowchart of a fifth specific example of a communication method according to this application. Compared with the embodiment described in FIG. 10, in this embodiment, the V-AMF sends a user policy control create request message (Npcf_UEPolicyControl Create Request), and actively includes a mapping relationship in the request message.

S1101 is the same as S1001, and details are not described herein again.

S1102 is the same as S1002, and details are not described herein again.

S1103: The V-AMF determines that the mapping relationship needs to be sent to a V-PCF.

Specifically, the V-AMF determines, based on an HPLMN ID of the UE, that the mapping relationship needs to be sent to the V-PCF. For example, for content included in the mapping relationship, refer to Table 11. Details are not described herein again.

S1104: The V-AMF sends a first request message to the V-PCF, where the first request message includes the mapping relationship.

Specifically, the V-AMF sends the mapping relationship to the V-PCF by sending the first request message. The first request message may be a user policy control create request message (Npcf_UEPolicyControl Create Request), and is used to request the V-PCF to create a UE policy association (UE Policy Association).

S1105 is the same as S1004, and details are not described herein again.

S1106 is the same as S1011, and details are not described herein again.

S1107: The V-PCF sends a second request message to an H-PCF.

The second request message may be a user policy control create request message (Npcf_UEPolicyControl Create Request), and the second request message is used to request to create the UE policy association (UE Policy Association).

It should be noted that the second request message includes the second service parameter.

S1108: The H-PCF generates a URSP of the UE.

Specifically, the H-PCF generates the URSP based on UE context policy control data (UE context policy control data) obtained from an H-UDR and the second service parameter received from the V-PCF. For ease of differentiation, the URSP may be referred to as a third URSP. For example, content included in the UE context policy control data (UE context policy control data) may be shown in Table 10, content included in the third URSP may be the same as that of the second URSP in FIG. 10, and the content of the third URSP may be shown in Table 12.

S1109: The H-PCF sends a second response message to the V-PCF.

Specifically, the second response message may be a user policy control create response message (Npcf_UEPolicyControl Create Response message), and the second response message includes the third URSP generated by the H-PCF.

S1110: The V-PCF sends a first response message to the V-AMF.

Specifically, the first response message may be a user policy control create response message (Npcf_UEPolicyControl Create Response message), and the first response message includes the third URSP generated by the H-PCF.

Optionally, after receiving the third URSP, the V-AMF may send the third URSP to the UE, so that the UE accesses a visited service.

S1111: The V-AMF determines an updated mapping relationship.

Specifically, when subscription data of the UE is updated at a moment, the V-AMF generates a new mapping relationship based on latest subscription data of the UE and a roaming agreement. For example, the V-AMF determines updated configured network slice identification information (new Configured NSSAI) and/or updated mapping of configured NSSAI (new mapping of Configured NSSAI) based on the latest subscription data of the UE and the roaming agreement, and determines the updated mapping relationship based on the new configured NSSAI and/or the new mapping of configured NSSAI.

In addition, the V-AMF updates a locally stored mapping relationship, for example, updates locally stored configured NSSAI and/or mapping of configured NSSAI.

S1112: The V-AMF sends a third request message to the V-PCF, where the third request message includes the updated mapping relationship.

Specifically, the V-AMF sends the new mapping relationship to the V-PCF by sending the third request message. The third request message may be a user policy control update request message (Npcf_UEPolicyControl Update Request), and is used to request the V-PCF to modify the UE policy association (UE Policy Association Modification).

S1113: The V-PCF, the H-PCF, and the V-AMF perform a URSP update procedure of the UE.

Specifically, the V-PCF updates a service parameter based on the new mapping relationship, and sends an updated service parameter to the H-PCF. The H-PCF updates the URSP of the UE based on the updated service parameter, and sends the updated URSP of the UE to the V-PCF. The V-PCF sends the updated URSP of the UE to the V-AMF. For a specific process thereof, refer to the foregoing description, and details are not described herein again.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses the service of the visited network.

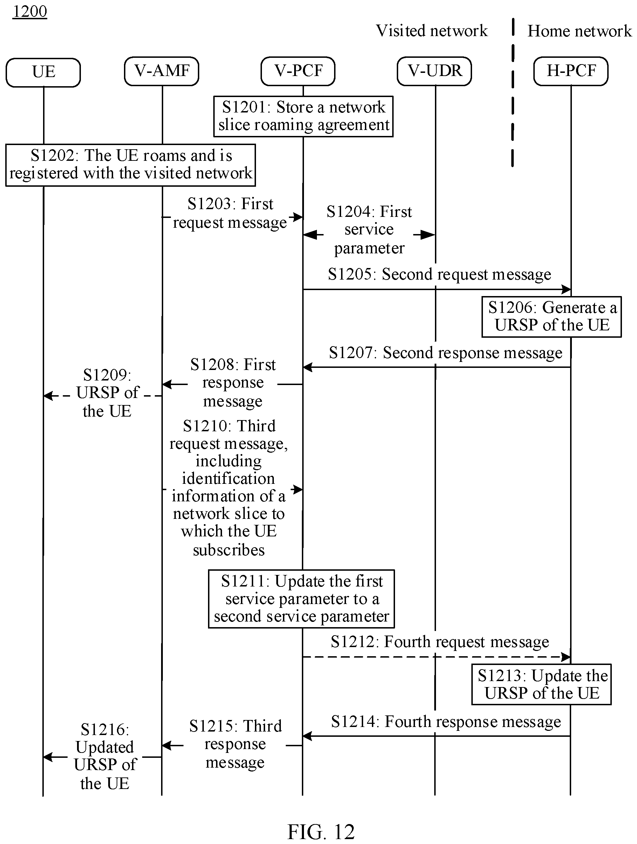

FIG. 12 is a schematic flowchart of a sixth specific example of a communication method according to this application. Compared with FIG. 10, in this embodiment, a V-PCF stores a network slice roaming agreement, and the V-PCF needs to obtain, from a V-AMF, only identification information of a network slice to which the UE subscribes (Subscribed NSSAI).

S1201: The V-PCF stores the network slice roaming agreement.

For a specific step and content that the V-PCF stores the network slice roaming agreement, refer to the descriptions in S1001 in which the V-AMF stores the network slice roaming agreement. Details are not described herein again.

S1202 is the same as S1002, and details are not described herein again.

S1203 is the same as S1003, and details are not described herein again.

S1204 is the same as S1004, and details are not described herein again.

S1205 is the same as S1005, and details are not described herein again.

S1206 is the same as S1006, and details are not described herein again.

S1207 is the same as S1007, and details are not described herein again.

S1208: The V-PCF sends a first response message to the V-AMF.

Specifically, the first response message may be a user policy control create response message (Npcf_UEPolicyControl Create Response message), and the first response message includes the first URSP generated by the H-PCF.

The first response message further includes second information, used to obtain identification information of a network slice to which the UE subscribes (Subscribed NSSAI). The second information may be policy control create request trigger information (PolicyControl Request Trigger), and indicate the V-AMF to send a user policy control update request message (Npcf_UEPolicyControl Update Request) to the V-PCF when a preset condition is met. The request message needs to include the identification information of the network slice to which the UE subscribes (Subscribed NSSAI). A case in which the preset condition is met is not limited in this application. For example, the case may be a case in which the identification information of the network slice to which the UE subscribes exists, or a case in which the identification information of the network slice to which the UE subscribes is updated.

S1209 is the same as S1009, and details are not described herein again.

S1210: The V-AMF sends a third request message to the V-PCF, where the third request message includes the identification information of the network slice to which the UE subscribes.

Specifically, after obtaining the identification information of the network slice to which the UE subscribes, and determining that the preset condition is met, the V-AMF sends, to the V-PCF by sending the third request message, the identification information of the network slice to which the UE subscribes. The third request message may be a user policy control create update request message (Npcf_UEPolicyControl UpdateRequest), and is used to request the V-PCF to modify the UE policy association (UE Policy Association Modification).

S1211: The V-PCF updates the first service parameter to a second service parameter.

Specifically, the V-PCF needs to determine the mapping relationship based on the identification information of the network slice to which the UE subscribes and the roaming agreement. The mapping relationship includes a mapping relationship between network slice identification information of the visited network and network slice identification information of the home network, the first service parameter includes the network slice identification information of the visited network VPLMN S-NSSAI, and the second service parameter includes the home network slice identification information HPLMN S-NSSAI.

For example, when the network slice identification information included in the first service parameter (VPLMN specific service parameter) is VPLMN #1 S-NSSAI #1, VPLMN #1 S-NSSAI #2, and VPLMN #1 S-NSSAI #3 (as shown in Table 9), and the mapping relationship includes that HPLMN S-NSSAI #A can be mapped to VPLMN #1 S-NSSAI #1, and HPLMN S-NSSAI #B can be mapped to VPLMN #1 S-NSSAI #2 (as shown in Table 11), the V-PCF may determine, based on the mapping relationship, to map VPLMN #1 S-NSSAI #1 and VPLMN #1 S-NSSAI #2 included in PLMN specific service parameters to HPLMN S-NSSAI #A and HPLMN S-NSSAI #B respectively. The network slice identification information included in the second service parameter is HPLMN S-NSSAI #A and HPLMN S-NSSAI #B. Because the mapping relationship does not indicate which HPLMN S-NSSAI has a mapping relationship with VPLMN #1 S-NSSAI #3, the second service parameter does not need to include VPLMN #1 S-NSSAI #3. It may be understood that the network slice identification information included in the second service parameter is HPLMN S-NSSAI and belongs to the network slice to which the UE subscribes.

S1212 is the same as S1012, and details are not described herein again.

S1213 is the same as S1013, and details are not described herein again.

S1214 is the same as S1014, and details are not described herein again.

S1215 is the same as S1015, and details are not described herein again.

S1216 is the same as S1016, and details are not described herein again.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses the service of the visited network.

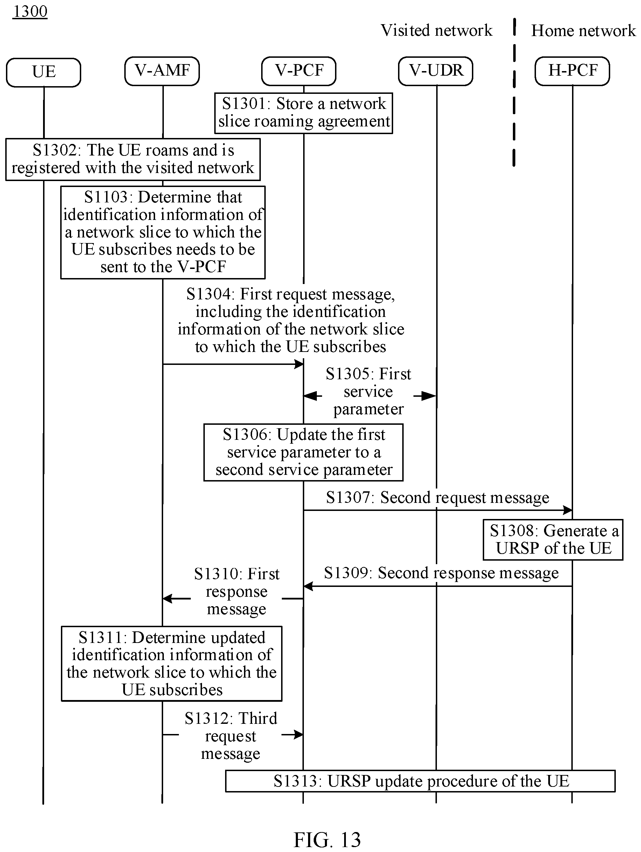

FIG. 13 is a schematic flowchart of a seventh specific example of a communication method according to this application. Compared with the embodiment in FIG. 12, in this embodiment, a V-PCF no longer sends policy control create request trigger information (PolicyControl Request Trigger) to a V-AMF, but the V-AMF actively sends a user policy control create request message (Npcf_UEPolicyControl Create Request). The request message includes identification information of a network slice to which UE subscribes.

S1301 is the same as S1201, and details are not described herein again.

S1302 is the same as S1202 and S1002, and details are not described herein again.

S1303: The V-AMF determines that the identification information of the network slice to which the UE subscribes needs to be sent to the V-PCF.

Specifically, the V-AMF determines, based on an HPLMN ID, that the identification information of the network slice to which the UE subscribes (Subscribed NSSAI) needs to be sent to the V-PCF.

S1304: The V-AMF sends a first request message to the V-PCF, where the first request message includes the identification information of the network slice to which the UE subscribes.

Specifically, the V-AMF sends, to the V-PCF by sending the first request message, the identification information of the network slice to which the UE subscribes. The first request message may be a user policy control create request message (Npcf_UEPolicyControl Create Request), and is used to request the V-PCF to create a UE policy association (UE Policy Association).

S1305 is the same as S1204 and S1004, and details are not described herein again.

S1306 is the same as S1211, and details are not described herein again.

S1307: The V-PCF sends a second request message to an H-PCF.

The second request message may be a user policy control create request message (Npcf_UEPolicyControl Create Request), and the second request message is used to request to create the UE policy association (UE Policy Association).

It should be noted that the second request message includes the second service parameter.

S1308: The H-PCF generates a URSP of the UE.

Specifically, the H-PCF generates the URSP based on UE context policy control data (UE context policy control data) obtained from an H-UDR and the second service parameter received from the V-PCF. For ease of differentiation, the URSP may be referred to as a third URSP. For example, content included in the UE context policy control data (UE context policy control data) may be shown in Table 10, content included in the third URSP may be the same as that of the second URSP in FIG. 10, and the content of the third URSP may be shown in Table 12.

S1309: The H-PCF sends a second response message to the V-PCF.

Specifically, the second response message may be a user policy control create response message (Npcf_UEPolicyControl Create Response message), and the second response message includes the third URSP generated by the H-PCF.

S1310: The V-PCF sends a first response message to the V-AMF.

Specifically, the first response message may be a user policy control create response message (Npcf_UEPolicyControl Create Response message), and the first response message includes the third URSP generated by the H-PCF.

Optionally, after receiving the third URSP, the V-AMF may send the third URSP to the UE, so that the UE accesses a visited service.

S1311: The V-AMF determines updated identification information of the network slice to which the UE subscribes.

Specifically, when subscription data of the UE is updated at a moment, the V-AMF determines, based on latest subscription data of the UE, the updated identification information of the network slice to which the UE subscribes.

S1312: The V-AMF sends a third request message to the V-PCF, where the third request message includes the updated identification information of the network slice to which the UE subscribes.

Specifically, the V-AMF sends, to the V-PCF by sending the third request message, the updated identification information of the network slice to which the UE subscribes. The third request message may be a user policy control update request message (Npcf_UEPolicyControl Update Request), and is used to request the V-PCF to modify the UE policy association (UE Policy Association Modification).

S1313: The V-PCF, the H-PCF, and the V-AMF perform a URSP update procedure of the UE.

Specifically, the V-PCF determines a new mapping relationship based on the updated identification information of the network slice to which the UE subscribes, updates a service parameter based on the new mapping relationship, and sends an updated service parameter to the H-PCF. The H-PCF updates the URSP of the UE based on the updated service parameter, and sends the updated URSP of the UE to the V-PCF. The V-PCF sends the updated URSP of the UE to the V-AMF. For a specific process thereof, refer to the foregoing description, and details are not described herein again.

According to the technical solution of this application, a service parameter can be updated based on a mapping relationship between visited network slice identification information of the terminal device and home network slice identification information of the terminal device. This helps generate the user route selection policy for the terminal device, so that the terminal device successfully accesses the service of the visited network.

This application further provides a communication system. The communication system includes a visited policy control network element and a home policy control network element. The visited policy control network element is configured to: update a first service parameter to a second service parameter based on a mapping relationship between first network slice identification information of a visited network and second network slice identification information of a home network, and send the second service parameter to the home policy control network element, where the first service parameter includes the first network slice identification information of the visited network, and the second service parameter includes the second network slice identification information of the home network. The home policy control network element is configured to determine a user route selection policy for a terminal device based on the second service parameter, where the user route selection policy is to be used by the terminal device to access a visited service.

Optionally, the communication system further includes a visited mobility management network element. The visited mobility management network element is configured to send the mapping relationship to the visited policy control network element, or send, to the visited policy control network element, identification information of a network slice to which the terminal device subscribes.

For example, according to the communication system provided in this application, a mapping relationship between visited network slice identification information of the terminal device and home network slice identification information of the terminal device can be obtained. This helps generate the user route selection policy for the terminal device, so that the terminal device successfully accesses the service of the visited network.

It should be understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that, in the foregoing embodiments of this application, a method implemented by a communication device may alternatively be implemented by a component (for example, a chip or a circuit) that can be configured in the communication device.

It should be noted that the foregoing describes the methods by using an example in which the "terminal device" in this application is UE. In actual application, the UE may also be replaced with another terminal device. This is not limited in this application. Optionally, the UE may access a visited service by creating a session. The "session" may be a PDU session, or may be another session. This is not limited in this application.

The communication method provided in embodiments of this application is described in detail above with reference to FIG. 5 to FIG. 13. The foregoing communication method is mainly described from a perspective of interaction between network elements. It may be understood that, to implement the foregoing functions, each network element includes a corresponding hardware structure and/or software module for executing the functions. A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

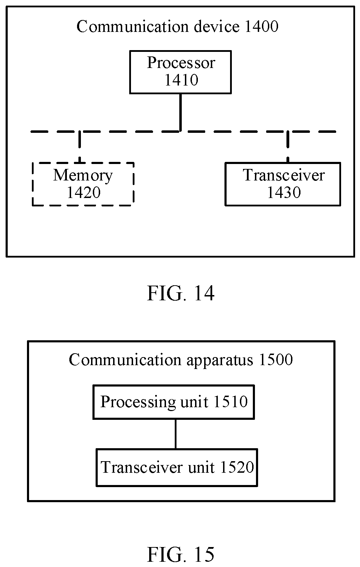

The communication apparatus provided in embodiments of this application is described below in detail with reference to FIG. 14 and FIG. 15. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmitting end device or a receiving end device may be divided into functional modules according to the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, there may be another division manner. An example in which each functional module is obtained through division based on each corresponding function is used below for description.

FIG. 14 is a schematic block diagram of an example of a communication device 1400 according to this application. Any network element, for example, a policy control network element or a mobility management network element, in any one of the foregoing method 500 to method 1300 may be implemented by the communication device shown in FIG. 14.

It should be understood that the communication device 1400 may be a physical device, or may be a component (for example, an integrated circuit or a chip) of the physical device, or may be a functional module in the physical device.

As shown in FIG. 14, the communication device 1400 includes one or more processors 1410. The processor 1410 may store execution instructions for performing the method in embodiments of this application. Optionally, the processor 1410 may invoke an interface to implement receiving and sending functions. The interface may be a logical interface or a physical interface. This is not limited. For example, the interface may be a transceiver circuit or an interface circuit. Transceiver circuits or interface circuits configured to implement receiving and sending functions may be separated, or may be integrated. The transceiver circuit or the interface circuit may be configured to read and write code/data, or the transceiver circuit or the interface circuit may be configured to transmit or transfer a signal.

Optionally, the interface may be implemented through a transceiver. Optionally, the communication device 1400 may further include a transceiver 1430. The transceiver 1430 may be referred to as a transceiver unit, a transceiver machine, a transceiver circuit, a transceiver, or the like, and is configured to implement receiving and sending functions.

Optionally, the communication device 1400 may further include a memory 1420. A specific deployment location of the memory 1420 is not specifically limited in this embodiment of this application. The memory may be integrated into the processor, or may be independent of the processor. When the communication apparatus 1400 does not include a memory, the communication device 1400 needs to have only a processing function, and the memory may be deployed at another location (for example, a cloud system).

The processor 1410, the memory 1420, and the transceiver 1430 communicate with each other by using an internal connection path, to transfer a control signal and/or a data signal.

It may be understood that, although not shown, the communication device 1400 may further include another apparatus, for example, an input apparatus, an output apparatus, or a battery.

Optionally, in some embodiments, the memory 1420 may store the execution instructions for performing the method in embodiments of this application. The processor 1410 may execute the instructions stored in the memory 1420 and complete, in combination with other hardware (for example, the transceiver 1430), the steps performed in the following method. For a specific working process and beneficial effects, refer to the descriptions in the foregoing method embodiments.

The method disclosed in embodiments of this application may be applied to the processor 1410, or implemented by the processor 1410. The processor 1410 may be an integrated circuit chip and has a signal processing capability. In an implementation process, steps of the method may be completed by using an integrated logic circuit of hardware in the processor or an instruction in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps of the foregoing method in combination with hardware of the processor.

It may be understood that the memory 1420 may be a volatile memory or a nonvolatile memory, or may include both a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, which is used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

FIG. 15 is a schematic block diagram of a communication apparatus 1500 according to this application.

Optionally, a specific form of the communication apparatus 1500 may be a general-purpose computer device or a chip in a general-purpose computer device. This is not limited in this embodiment of this application. As shown in FIG. 15, the communication apparatus includes a processing unit 1510 and a transceiver unit 1520.

Specifically, the communication apparatus 1500 may be any network element in this application, and may implement a function that can be implemented by the network element. It should be understood that the communication apparatus 1500 may be a physical device, or may be a component (for example, an integrated circuit or a chip) of the physical device, or may be a functional module in the physical device.

In a possible design, the communication apparatus 1500 may be the policy control apparatus in the foregoing method embodiments, or may be a chip configured to implement a function of the policy control apparatus in the foregoing method embodiments.

For example, the transceiver unit 1520 is configured to send first information, where the first information includes identification information of a first network, first network slice identification information of a visited network, and identification information of a network slice to which a terminal device subscribes. The transceiver unit 1520 is further configured to receive second information, where the second information includes a mapping relationship between second network slice identification information of the visited network and first network slice identification information of a home network, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device.

Optionally, when the communication apparatus 1500 belongs to the home network, the transceiver unit 1520 is further configured to receive third information, where the third information includes the first network slice identification information of the visited network. The processing unit 1510 is configured to determine the user route selection policy URSP of the terminal device based on the second information and the third information, where the URSP is to be used by the terminal device to access a service of the visited network. The transceiver unit 1520 is further configured to send the URSP.

Optionally, the transceiver unit 1520 is further configured to receive fourth information, where the fourth information indicates updated identification information of the network slice to which the terminal device subscribes. The transceiver unit 1520 is further configured to send fifth information, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

Optionally, when the communication apparatus 1500 belongs to the visited network, the transceiver unit 1520 is further configured to send second information and receive a URSP, where the URSP is to be used by the terminal device to access a service of the visited network. The transceiver unit 1520 is further configured to receive third information, where the third information includes identification information of a network slice to which the terminal device subscribes.

Optionally, the transceiver unit 1520 is further configured to: receive fourth information, where the fourth information includes updated identification information of the network slice to which the terminal device subscribes; and send fifth information, where the fifth information is used to request a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

For another example, the processing unit 1510 is configured to: update a first service parameter to a second service parameter based on a mapping relationship between first network slice identification information of a visited network and second network slice identification information of a home network, where the first service parameter includes the first network slice identification information of the visited network, and the second service parameter includes the second network slice identification information of the home network; and the transceiver unit 1520 is configured to send the second service parameter to a home policy control network element, where the second service parameter is used to determine a user route selection policy for a terminal device.

Optionally, the transceiver unit 1520 is further configured to receive the mapping relationship from a visited mobility management network element.

Optionally, the transceiver unit 1520 is further configured to send a message for obtaining the mapping relationship to the visited mobility management network element.

Optionally, the transceiver unit 1520 is further configured to obtain the mapping relationship from a local configuration.

Optionally, the transceiver unit 1520 is further configured to receive, from the visited mobility management network element, identification information of a network slice to which the terminal device subscribes. The processing unit 1510 is further configured to update the first service parameter to the second service parameter based on the mapping relationship and the identification information of the network slice to which the terminal device subscribes.

Optionally, the transceiver unit 1520 is further configured to send, to the visited mobility management network element, a message for obtaining the identification information of the network slice to which the terminal device subscribes.

Optionally, the transceiver unit 1520 is further configured to obtain the first service parameter from a visited unified data repository network element.

Optionally, the transceiver unit 1520 is further configured to: receive the user route selection policy from the home policy control network element; and send the user route selection policy to the visited mobility management network element, where the user route selection policy is to be used by the terminal device to access a service of the visited network.

It should be understood that when the communication apparatus 1500 is a policy control device, the transceiver unit 1520 in the communication apparatus 1500 may be implemented by using a communication interface (for example, a transceiver or an input/output interface), and the processing unit 1510 in the communication apparatus 1500 may be implemented by using at least one processor, for example, may correspond to the processor 1410 shown in FIG. 14.

Optionally, the communication apparatus 1500 may further include a storage unit. The storage unit may be configured to store instructions or data. The processing unit may invoke the instructions or the data stored in the storage unit, to implement a corresponding operation.

It should be further understood that a specific process in which the units perform the foregoing corresponding steps is described in detail in the foregoing method embodiments. For brevity, details are not described herein.

In another possible design, the communication apparatus 1500 may be the network slice selection network element or the access management network element in the foregoing method embodiments, or may be a chip configured to implement a function of the network slice selection network element or the access management network element in the foregoing method embodiments.

For example, the transceiver unit 1520 is configured to receive first information, where the first information includes identification information of a first network, first network slice identification information of a visited network, and identification information of a network slice to which a terminal device subscribes. The processing unit 1510 is configured to determine second information based on the first information. The transceiver unit 1520 is further configured to send the second information, where the second information includes a mapping relationship between second network slice identification information of the visited network of the terminal device and first network slice identification information of a home network of the terminal device, the second network slice identification information of the visited network is a subset of the first network slice identification information of the visited network, the first network slice identification information of the home network is a subset of the identification information of the network slice to which the terminal device subscribes, and the second information is used to determine a user route selection policy URSP for the terminal device.

Optionally, the transceiver unit 1520 is further configured to receive fifth information, where the fifth information includes updated identification information of the network slice to which the terminal device subscribes. The second network element sends sixth information to the first network element, where the sixth information includes a mapping relationship between third network slice identification information of the visited network and second network slice identification information of the home network, the third network slice identification information of the visited network is a subset of the first network slice identification information of the visited network, and the second network slice identification information of the home network is a subset of the updated identification information of the network slice to which the terminal device subscribes.

It should be understood that when the communication apparatus 1500 is a network slice selection network element or an access management network element, the transceiver unit 1520 in the communication apparatus 1500 may be implemented by using a communication interface (for example, a transceiver or an input/output interface), for example, may correspond to the communication interface 1430 shown in FIG. 14; and the processing unit 1510 in the communication apparatus 1500 may be implemented by using at least one processor, for example, may correspond to the processor 1410 shown in FIG. 14.

Optionally, the communication apparatus 1500 may further include a storage unit. The storage unit may be configured to store instructions or data. The processing unit may invoke the instructions or the data stored in the storage unit, to implement a corresponding operation.

It should be further understood that a specific process in which the units perform the foregoing corresponding steps is described in detail in the foregoing method embodiments. For brevity, details are not described herein.

It should be further understood that the apparatus 1500 may be further configured to implement functions of network elements such as the PCF, the AMF, and the NSSF in the foregoing method embodiments. The transceiver unit 1520 may be configured to implement operations related to receiving and sending. The processing unit 1510 may be configured to implement other operations other than receiving and sending. For details, refer to the descriptions in the foregoing method embodiments. Details are not listed herein again.

In addition, in this application, the communication apparatus 1500 is presented in a form of functional module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1500 may be in the form shown in FIG. 15. The processing unit 1510 may be implemented by using the processor 1410 shown in FIG. 14. Optionally, if the computer device shown in FIG. 14 includes the memory 1420, the processing unit 1510 may be implemented by using the processor 1410 and the memory 1420. The transceiver unit 1520 may be implemented by using the transceiver 1430 shown in FIG. 14. The transceiver 1430 has a receiving function and a sending function. Specifically, the processor is implemented by executing a computer program stored in the memory. Optionally, when the apparatus 1500 is a chip, a function and/or an implementation process of the transceiver unit 1520 may be alternatively implemented by using a pin, a circuit, or the like. Optionally, the memory may be a storage unit on the chip, such as a register or a cache. The storage unit may be a storage unit that is in the computer device and that is located outside the chip, for example, the memory 1420 shown in FIG. 14, or may be a storage unit that is deployed in another system or device but not located in the computer device. A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

Aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable media" may include but is not limited to a radio channel, and various other media that can store, include, and/or carry instructions and/or data.

According to the method provided in embodiments of this application, this application further provides a computer program product. The computer program product includes computer program code. When the computer program code is run on a computer, the computer is enabled to perform the method in either of the embodiments shown in FIG. 5 and FIG. 13.

According to the method provided in embodiments of this application, this application further provides a computer-readable medium. The computer-readable medium stores program code. When the program code is run on a computer, the computer is enabled to perform the method in either of the embodiments shown in FIG. 5 and FIG. 8.

According to the method provided in embodiments of this application, this application further provides a system. The system includes the foregoing apparatus or device.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disc, SSD)), or the like.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local process and/or a remote process based on a signal having one or more data packets (for example, data from two components interacting with another component in a local system, a distributed system, and/or across a network, such as the internet interacting with other systems by using the signal).

It should also be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the objects, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc. The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
updating, by a visited policy control network element, a first service parameter to a second service parameter based on a mapping relationship between first network slice identification information of a visited network and second network slice identification information of a home network, wherein the first service parameter comprises the first network slice identification information of the visited network, and the second service parameter comprises the second network slice identification information of the home network; and
sending, by the visited policy control network element, the second service parameter to a home policy control network element, wherein the second service parameter is used to determine a user route selection policy for a terminal device.

2. The method according to claim 1, wherein the method further comprises:
receiving, by the visited policy control network element, the mapping relationship from a visited mobility management network element.

3. The method according to claim 2, wherein the method further comprises:
sending, by the visited policy control network element, a message for obtaining the mapping relationship to the visited mobility management network element.

4. The method according to any one of claims 1 to 3, wherein the mapping relationship comprises a mapping relationship that is between configured network slice identification information and home network slice identification information and that is determined by the visited network for the terminal device, the configured network slice identification information comprises the first network slice identification information, and the home network slice identification information comprises the second network slice identification information.

5. The method according to claim 1, wherein the method further comprises:
obtaining, by the visited policy control network element, the mapping relationship from a local configuration.

6. The method according to claim 5, wherein the method further comprises:
receiving, by the visited policy control network element from a visited mobility management network element, identification information of a network slice to which the terminal device subscribes; and
the updating, by a visited policy control network element, a first service parameter to a second service parameter based on a mapping relationship between first network slice identification information of a visited network and second network slice identification information of a home network comprises:
updating, by the visited policy control network element, the first service parameter to the second service parameter based on the mapping relationship and the identification information of the network slice to which the terminal device subscribes.

7. The method according to claim 6, wherein the method further comprises:
sending, by the visited policy control network element to the visited mobility management network element, a message for obtaining the identification information of the network slice to which the terminal device subscribes.

8. The method according to any one of claims 1 to 7, wherein the method further comprises:
obtaining, by the visited policy control network element, the first service parameter from a visited unified data repository network element.

9. The method according to any one of claims 1 to 8, wherein the method further comprises:
receiving, by the visited policy control network element, the user route selection policy from the home policy control network element; and
sending, by the visited policy control network element, the user route selection policy to the visited mobility management network element, wherein the user route selection policy is to be used by the terminal device to access a service of the visited network.

10. A communication system, comprising a visited policy control network element and a visited mobility management network element, wherein
the visited mobility management network element is configured to send a mapping relationship between first network slice identification information of a visited network and second network slice identification information of a home network to the visited policy control network element; and
the visited policy control network element is configured to: update a first service parameter to a second service parameter based on the mapping relationship, and send the second service parameter to a home policy control network element, wherein the first service parameter comprises the first network slice identification information of the visited network, and the second service parameter comprises the second network slice identification information of the home network.

11. The system according to claim 10, wherein the system further comprises the home policy control network element; and
the home policy control network element is configured to determine a user route selection policy for a terminal device based on the second service parameter, wherein the user route selection policy is to be used by the terminal device to access a visited service.

12. The system according to claim 11, wherein
the visited mobility management network element is further configured to receive, from the visited policy control network element, a message for obtaining the mapping relationship.

13. The system according to any one of claims 10 to 12, wherein the mapping relationship comprises a mapping relationship that is between configured network slice identification information and home network slice identification information and that is determined by the visited network for the terminal device, the configured network slice identification information comprises the first network slice identification information, and the home network slice identification information comprises the second network slice identification information.

14. The system according to claim 10, wherein the visited policy control network element is further configured to obtain the mapping relationship from a local configuration.

15. The system according to claim 14, wherein
the visited mobility management network element is further configured to send, to the visited policy control network element, identification information of a network slice to which the terminal device subscribes; and
that the visited policy control network element is configured to update the first service parameter to the second service parameter based on the mapping relationship between the first network slice identification information of the visited network and the second network slice identification information of the home network specifically comprises:
updating the first service parameter of the terminal device to the second service parameter based on the mapping relationship and the identification information of the network slice to which the terminal device subscribes.

16. The system according to claim 15, wherein
the visited mobility management network element is further configured to receive, from the visited policy control network element, a message for obtaining the identification information of the network slice to which the terminal device subscribes.

17. The system according to any one of claims 10 to 16, wherein the system further comprises a visited unified data repository network element, and the visited unified data repository network element is configured to send the first service parameter to the visited policy control network element.

18. The system according to any one of claims 11 to 17, wherein
the home policy control network element is further configured to send the user route selection policy to the visited policy control network element; and
the visited policy control network element is further configured to send the user route selection policy to the visited mobility management network element, wherein the user route selection policy is to be used by the terminal device to access the service of the visited network.

19. A communication apparatus, comprising a processor, configured to execute computer instructions stored in a memory, so that the communication apparatus performs the method according to any one of claims 1 to 9.

20. A computer-readable storage medium, wherein the computer-readable storage medium stores a computer program, and when the computer program is executed by a communication apparatus, the method according to any one of claims 1 to 9 is performed.

21. A chip system, comprising a processor, configured to invoke a computer program or instructions from a memory and run the computer program or the instructions, so that a communication apparatus in which the chip system is installed implements the method according to any one of claims 1 to 9.

22. A communication method, comprising:
sending, by a visited mobility management network element, a mapping relationship between first network slice identification information of a visited network and second network slice identification information of a home network to a visited policy control network element;
updating, by the visited policy control network element, a first service parameter to a second service parameter based on the mapping relationship, wherein the first service parameter comprises the first network slice identification information of the visited network, and the second service parameter comprises the second network slice identification information of the home network; and
sending, by the visited policy control network element, the second service parameter to a home policy control network element.

23. The method according to claim 22, wherein the method further comprises:
determining, by the home policy control network element, a user route selection policy for a terminal device based on the second service parameter, wherein the user route selection policy is to be used by the terminal device to access a visited service.

24. The method according to claim 23, wherein the method further comprises:
receiving, by the visited mobility management network element from the visited policy control network element, a message for obtaining the mapping relationship.

25. The method according to claim 22, wherein the method further comprises:
sending, by the visited mobility management network element to the visited policy control network element, identification information of a network slice to which a terminal device subscribes; and
the updating, by the visited policy control network element, a first service parameter to a second service parameter based on the mapping relationship comprises:
updating, by the visited policy control network element, the first service parameter of the terminal device to the second service parameter based on the mapping relationship and the identification information of the network slice to which the terminal device subscribes.

26. The method according to claim 25, wherein the method further comprises:
receiving, by the visited mobility management network element from the visited policy control network element, a message for obtaining the identification information of the network slice to which the terminal device subscribes.

27. The method according to any one of claims 22 to 26, wherein the method further comprises:
sending, by a visited unified data repository network element, the first service parameter to the visited policy control network element.

28. The method according to any one of claims 22 to 27, wherein the method further comprises:
sending, by the home policy control network element, the user route selection policy to the visited policy control network element; and
sending, by the visited policy control network element, the user route selection policy to the visited mobility management network element, wherein the user route selection policy is to be used by the terminal device to access the service of the visited network.
